(19) Europäisches Patentamt
European Patent Office
Office européen des brevets

(11) **EP 2 515 526 A2**

(12) **EUROPEAN PATENT APPLICATION**

(43) Date of publication:
24.10.2012 Bulletin 2012/43

(51) Int Cl.:
*H04N 5/232* (2006.01)  *H04N 5/33* (2006.01)

(21) Application number: 12275040.9

(22) Date of filing: 06.04.2012

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 08.04.2011 US 201113082568
29.08.2011 US 201113220612
02.09.2011 US 201161530867 P
02.09.2011 US 201161530872 P
11.11.2011 US 201113294964
11.11.2011 US 201113294977

(71) Applicant: **DigitalOptics Corporation Europe Limited**
**Galway (IE)**

(72) Inventors:
• **Paoletti, Tomaso**
**San Jose, CA California 95134 (US)**
• **Uppuluri, Avinash**
**San Jose, CA California 95134 (US)**
• **Chakravarthula, Hari**
**San Jose, CA California 95134 (US)**
• **Morales, Celia**
**San Jose, CA California 95134 (US)**
• **Mehra, Sumat**
**San Jose, CA California 95134 (US)**

(74) Representative: **Clark, Jane Anne**
**Mathys & Squire LLP**
**120 Holborn**
**London EC1N 2SQ (GB)**

Remarks:
Claims filed after the date of filing of the application (Rule 68(4) EPC).

(54) **Display device with image capture and analysis module**

(57) An electronic display includes an image capture and analysis feature. The display may be configured to detect a user parameter of a user positioned before the display. The device can analyze the image and dynamically adjust fonts and/or user preference settings, and/or provide ergonomic analysis. A mobile video-conferencing device includes a camera built into the device housing and configured to capture, detect and recognize images of a user who is viewing the display. An infrared (IR) light source and IR sensitive image sensor may be used to capture images of the user under low-light, no light or uneven light conditions to enhance and transmit to a remote video conference participant an image of the user's face.

**Figure 1**

Printed by Jouve, 75001 PARIS (FR)

**Description**

PRIORITY

This application claims the benefit of priority to United States patent applications serial numbers (1) 13/220,612, filed August 29, 2011; (2) 13/294,977, filed November 11, 2011; (3) 61/530,872, filed September 2, 2011; (4) 13/294,964, filed November 11, 2011; (5) 61/530,867, filed September 2, 2011; and (6) 13/082,568, filed April 8, 2011.

FIELD OF THE INVENTION

The invention relates to display devices, and particularly to displays with image capture and analysis components.

BACKGROUND

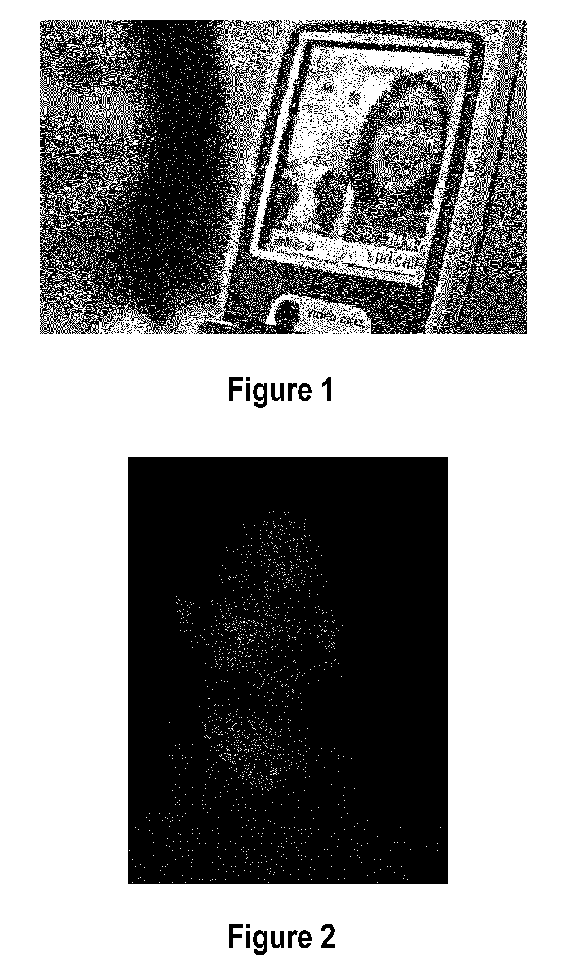

People and businesses continue to expect more and more from their handheld mobile smartphone devices. Audio-only conference calling has been available and widely used on mobile phones for many years. Video conferencing on mobile devices is in its infancy. It is desired to have a mobile device to assist a user to learn, interact, plan or check details for a trip, and other social and professional demands while on the move. It is also desired to have a mobile device that can provide a richer mobile video conferencing experience than is currently available. Figure 1 illustrates an example of a mobile video conferencing environment. The mobile smartphone display of Figure 1 includes face images of two participants in a video conference. A significant portion of the display includes background images of the locations of each participant that are not needed to carry out the video conference as desired. The participants may even specifically wish to not transmit background information to others on the call. US patent applications 12/883,183, 12/883,191 and 12/883,192 are assigned to the same assignee and hereby incorporated by reference as advantageously addressing this concern.

With the proper tools, advantageously rich video conferencing will be available to anyone on the move carrying a smartphone device. The inventors in the present application have recognized that there is also a particular need for a rich mobile video conferencing solution for no light, low Light and/or uneven lighting conditions, as well as for situations wherein the person and/or vehicle holding the mobile device is in motion relative to the background.

It is very likely for mobile video conferencing participant to be in an environment with low or uneven lighting conditions, because if the participant had an opportunity to utilize a preset video conferencing environment for the call, he or she probably would not choose to use a smartphone for the call. The display illustrated at Figure 2 includes the face at the lower left hand corner clearly both unevenly and inadequately lit. Uneven and low light conditions can cause undesirable effects on the users face image being displayed in the video conference, because often it is small details such as a person's smile or communicative facial gestures that make video conferencing so greatly desired but that are often difficult to resolve under low light or uneven light conditions. Accordingly, embodiments are described hereinbelow that provide improvements in the faces of participants being displayed in a mobile video conference under such low or uneven lighting conditions.

It is also likely that a mobile video conferencing participant will be walking, driving or otherwise moving during a call, because again, if the participant were in a static environment, such as a conference room, office or computer desk, or even a seated position with a laptop, having specifically prearranged lighting, a comfortable chair, and a web cam anchored to the ground or on a desk, then he or she would not likely use a smartphone for the call. As the participant attempts to hold the phone still relative to his or her face, the background will often be in rapid motion. Therefore, embodiments are described herein that efficiently use the limited computing resources of a mobile smartphone environment by focusing on the participant and reducing or eliminating the processing and/or transmitting of background images.

Electronic display devices are commonly used as television sets or with computers to display two-dimensional images to a user. In the case of computing, electronic display devices provide a visual interaction with the operating system of the computer.

In most cases, a user provides input to a computer with the use of an external input device, most commonly with the combination of a keyboard and a mouse or trackball. However, more recently, touchscreen devices (e.g., capacitive or resistive touchscreens) built into electronic displays have gained popularity as an alternative means for providing input to a computing device or television display.

Electronic displays have evolved from large, heavy cathode ray tube monitors (CRT) to lighter, thinner liquid crystal displays (LCD) and organic light emitting diode (OLED) displays. Many displays now incorporate additional features, such as cameras and universal serial bus (USB) ports, to improve the computing or television experience.

A computer user often spends a majority of his or her day interacting with the computer. For example, an office worker may spend hours in front of a display driven by a desktop or other computer. The user's health may be adversely affected if he or she uses the computer in an ergonomically-improper manner, such as viewing the display from a non-optimal location and/or under other unfavorable conditions that can be corrected through user behavior. Various techniques for ensuring ergonomically-proper computer use have been proposed, but there remains room for improvement.

BRIEF DESCRIPTION OF THE DRAWINGS

Figure 1 illustrates an example of a mobile video conferencing environment

Figure 2 illustrates an example of an image including a face taken under low light condition, e.g., 30 lux.

Figure 3 illustrates an example of a handheld device with one or more infrared emitters, e.g., a ring of infrared emitters.

Figure 4 illustrates a face detected with a single infrared emitter at 40 cm without any external source of visible light, i.e., the face is completely dark at 0 lux without the infrared emitter.

Figure 5 illustrates an example of an image taken at low light condition, e.g., 30 lux, with painting of a patch of skin tone from a calibration image taken at a higher light level.

Figure 6 illustrates an example of a calibration image taken at higher light level than the image of Figure 5, and ideally at an optimum light level.

Figures 7A-7B illustrate a sequence of two images taken using a handheld camera with different backgrounds but similar face positions indicated by similar outline shape in both.

Figures 8A-8B illustrate the sequence of two images of Figures 7A-7B, except this time with motion vector arrows indicating motion directions and magnitudes of the background versus foreground face objects in an exemplary mobile video conferencing environment.

Figure 9 is an illustration of a user in the field of view of a display.

Figure 10 is an illustration of a child user in the field of view of a display.

Figures 11A-11B are illustrations of different users in the field of view of a display.

Figure 12 is an illustration of a user in the field of view of a display with a user timer.

Figure 13 illustrates an ergonomic indicator to a user in the field of view of a display.

Figure 14 is an illustration of a privacy setting when two users are detected in the field of view of a display.

Figure 15 illustrates an indicator when a user is not recognized by a display.

Figure 16 illustrates a display that illuminates only a section of the display corresponding to a user's gaze.

Figure 17 illustrates a distance indicator to a user in the field of view of the display.

Figure 18 is an illustration of a user in the field of view of a display.

Figures 19A-19B illustrate adjusting the size of text on a display based on the age of the user.

Figures 20A-20B illustrate adjusting the size of icons on a display based on the age of the user.

Figures 21A-21B illustrate adjusting the size of text and/or icons on a display based on the distance of the user from the display.

Figure 22 is a block diagram showing an illustrative ergonomic sensor module.

Figure 23 is a diagram showing an example of an ergonomic sensor module integrated into a display.

Figure 24 is a diagram showing an example of an ergonomic sensor module used externally to a display.

Figure 25 is a flowchart showing steps in an illustrative processing method carried out when using an ergonomic sensor module.

Figure 26 is a diagram showing an example of a user's yaw angle relative to a display.

Figure 27 is a diagram showing an example of a user's pitch angle relative to a display.

DETAILED DESCRIPTION OF THE EMBODIMENTS

A hand-held camera-enabled video-conferencing device is provided that includes a housing configured to be held in a user's hand. A processor and memory are contained within the housing. The memory has code embedded therein for programming the processor, including video-conferencing, face detection, face recognition and associated image processing components. The memory further contains face data associated with one or more specific user identities. The device also includes a display built into the housing and configured to be viewable by a user during a video conference. A camera is also built into the housing and is configured to capture images of the user while viewing the display. The camera includes an infrared (IR) light source and IR sensitive image sensor for capturing images of the user under low-light or uneven light conditions, or both, to permit the face detection component to detect the user's face. The face recognition component is configured to associate a specific identity of a user to a detected face. The image processing component is configured to replace face data of the detected face with face data stored in the memory in accordance with the specific identity of the user to enhance and transmit to a remote video conference participant an image of the detected face captured under low light or uneven light conditions, or both.

The face data may include chrominance data or luminance data or both. The face detection or face recognition components, or both, may include classifiers trained to detect faces or to recognize faces, respectively, under low-light or uneven light conditions, or both. The IR light source may include one or more IR LEDs coupled to the housing and disposed to illuminate the user's face during a video conference. The memory may contain a face tracking component to track the detected face to permit the device to transmit approximately continuous video images of the user's face during the video conference.

The memory may include a component to estimate a distance to the user's face and control an output power of the IR light source based on the estimated distance. The estimate of the distance may be determined using auto-focus data and/or may be based on a detected size of the user's face. The memory may include a component to determine a location of a user's face relative to the device and to control a direction of the IR light source to illuminate the user's face.

A further hand-held camera-enabled video-conferencing device is provided that includes a housing configured to be held in a user's hand or hands, and a processor and memory contained within the housing. The memory has code embedded therein for programming the processor, including video-conferencing, and foreground/background segmentation components, or combinations thereof. A display is built into the housing and configured to be viewable by a user during a video conference. A camera is built into the housing and configured to capture images of the user while viewing the display. A communications interface transmits audio/visual data to a remote video conference participant. The foreground/background segmentation component is configured to extract user identity data without background data by discerning different motion vectors for foreground versus background data.

The user identity data may include face data. The foreground/background segmentation component may be calibrated to match specific user identity data as foreground data.

Another hand-held camera-enabled video-conferencing device is provided that includes a housing configured to be held in a user's hand or hands and a processor and memory contained within the housing that has code embedded therein for programming the processor, including video-conferencing, and foreground/background segmentation components, or combinations thereof. A display is built into the housing and configured to be viewable by a user during a video conference. A camera is built into the housing and configured to capture images of the user while viewing the display. A communications interface transmits audio/visual data to a remote video conference participant. The foreground/background segmentation component is configured to extract user identity data without background data by matching detected face data as foreground data.

The camera may include an infrared (IR) light source and IR sensitive image sensor for capturing images of the user under low-light or uneven light conditions, or both, to permit a face detection component to detect a user's face. The image processing component may replace face data of the detected face with face data stored in the memory in accordance with the specific identity of the user to enhance and transmit to a remote video conference participant an image of the detected face captured under low light or uneven light conditions, or both.

The memory may contain a face tracking component to track the detected face to permit the device to transmit approximately continuous video images of the user's face during the video conference.

The specific user identity data may include an image of a detected face. That data may include a neck, partial torso or shirt, or one or both arms, or portions or combinations thereof.

The memory may contain face data associated with one or more specific user identities, such that the specific user identity data is extracted based on matching the face data in the memory.

A method of dynamically changing a display parameter is provided, comprising detecting a user parameter of a user positioned before an electronic display, and automatically adjusting a user preference on the display or displaying an indicator based on the detected user parameter.

In some embodiments, the user parameter is an age of the user.

In another embodiment, an amount of displayable content is increased when the user is elderly. In another embodiment, an amount of displayable content is decreased when the user is a child or young adult.

In some embodiments, privacy settings are increased when the user is a child or young adult. In other embodiments, privacy settings are decreased when the user is an adult or elderly.

In some embodiments, the user parameter is a distance from the user to the electronic display. In one embodiment, a distance indicator is displayed when the distance is less than an optimal distance.

In one embodiment, the user parameter is a time the user has been positioned before the display. In some embodiments, a time indicator is displayed when the time is greater than a predetermined time limit.

In one embodiment, the user parameter is a head angle. In some embodiments, an ergonomic indicator is displayed when the head angle is improper.

In some embodiments, the user parameter is an ambient light level. In other embodiments, the user parameter is an ambient light level and a pupil closure percentage.

In one embodiment, if the ambient light level is low, and the pupil closure percentage is high, the display is automatically brightened. In another embodiment, if the ambient light level is low, and the pupil closure percentage is low, the display is automatically dimmed. In alternative embodiments, if the ambient light level is high, and the pupil closure percentage is high, the display is automatically brightened. In yet another embodiment, if the ambient light level is high, and the pupil closure percentage is low, the display is automatically dimmed.

The method of claim 13 wherein the display is automatically dimmed or brightened based on the detected ambient light level.

In some embodiments, the user parameter is an unknown user.

In one embodiment, the display is dimmed or turned off when the unknown user is detected. In another embodiment, the display is locked and a security indicator is shown on the display when the unknown user is detected. In some embodiments, the security indicator notifies the unknown user that access to the display is denied.

In some embodiments, the detecting step comprises detecting the user parameter with a sensor disposed on or near the electronic display. In one embodiment, the sensor comprises a camera.

In some embodiments, the electronic display comprises a computer monitor. In other embodiments, the electronic display comprises a cellular telephone.

In one embodiment, the automatically adjusting step comprises processing the user parameter with a controller and automatically adjusting the user preference on the display or displaying the indicator based on the detected user parameter.

An electronic display is also provided comprising sensors configured to detect a user parameter of a user positioned before the display, a screen configured to display text or images to the user, and a processor configured to adjust a user preference or display an indicator based on the detected user parameter.

In one embodiment, the user parameter is age.

In another embodiment, the user parameter is a distance from the user to the electronic display.

In some embodiments, the user parameter is a head angle of the user.

In one embodiment, the user parameter is an unknown user.

In some embodiments, the user parameter is an ambient light level

In some embodiments, the sensor comprises a camera.

In one embodiment, the electronic display comprises a computer monitor.

In another embodiment, the electronic display comprises a cellular telephone.

In some embodiments, the electronic display comprises a tablet computer.

A method of dynamically adjusting a display parameter is provided, comprising determining with a sensor whether a user's face is positioned before an electronic display, if the user's face is not positioned before the electronic display, monitoring for the user's face with the sensor for a predetermined period of time, and initiating a power savings routine on the electronic display if the user's face is not positioned before the electronic display during the predetermined period of time.

In some embodiments, the power savings routine comprises dimming the display.

In other embodiments, the power savings routine comprises powering off the display.

In some embodiments, after powering off the display, the method comprises occasionally powering on the sensor of the electronic display to monitor for the user's anatomy.

Some embodiments of the method further comprise determining with the sensor if the user's eyes are gazing towards the electronic display, if the user's eyes are not gazing towards the electronic display, monitoring with the sensor for the user's eyes to gaze towards the display during the predetermined period of time, and initiating the power savings routine on the electronic display if the user's eyes do not gaze towards the electronic display during the predetermined period of time.

In some embodiments, the predetermined period of time is user adjustable.

In other embodiments, a dimming percentage is user adjustable.

An electronic display is provided, comprising a sensor configured to detect a user's face positioned before the display, and a processor configured to implement a power savings routine if the user's face is not positioned before the display during a predetermined period of time.

In one embodiment, the sensor comprises a camera.

In other embodiments, the electronic display comprises a computer monitor.

In some embodiments, the electronic display comprises a cellular telephone.

A method of dynamically changing a display parameter is provided, comprising detecting a user parameter of a user positioned before an electronic display, and automatically adjusting a font size of text on the display based on the detected user parameter.

In some embodiments, the user parameter is an age of the user.

In one embodiment, the font size is increased when the user is elderly. In another embodiment, the font size is decreased when the user is a child or young adult.

In some embodiments, the user parameter is a distance from the user to the electronic display.

In one embodiment, the font size is increased when the distance is greater than an optimal distance. In another embodiment, the font size is decreased when the distance is less than an optimal distance.

In some embodiments, the font size changes dynamically in real time as the distance from the user to the electronic display changes.

In other embodiments, the font size is decreased in real time as the distance from the user to the electronic display becomes smaller, wherein the font size is increased in real time as the distance from the user to the electronic display becomes larger.

In some embodiments, the detecting step comprises detecting the user parameter with a sensor disposed on or near the electronic display. In one embodiment, the sensor comprises a camera.

In some embodiments, the electronic display comprises a computer monitor. In other embodiments, the display comprises a cellular telephone.

In one embodiment, the automatically adjusting step comprises processing the user parameter with a controller and automatically adjusting the font size of text on the display with the controller based on the detected user parameter.

A method of dynamically changing a display parameter is also provided, comprising detecting a user parameter of a user positioned before an electronic display, and automatically adjusting an icon size on the display based on the detected user parameter.

In some embodiments, the user parameter is an age of the user.

In one embodiment, the icon size is increased when the user is elderly. In another embodiment, the icon size is decreased when the user is a child or young adult.

In some embodiments, the user parameter is a distance from the user to the electronic display.

In one embodiment, the icon size is increased when the distance is greater than an optimal distance. In other embodiments, the icon size is decreased when the distance is less than an optimal distance.

In some embodiments, the detecting step comprises detecting the user parameter with a sensor disposed on or near the electronic display. In one embodiment, the sensor comprises a camera.

In some embodiments, the electronic display comprises a computer monitor. In other embodiments, the display comprises a cellular telephone.

In some embodiments, the automatically adjusting step comprises processing the user parameter with a controller and automatically adjusting the font size of text on the display with the controller based on the detected user parameter.

In other embodiments, the icon size changes dynamically in real time as the distance from the user to the electronic display changes.

In one embodiment, the icon size is decreased in real time as the distance from the user to the electronic display becomes smaller, wherein the icon size is increased in real time as the distance from the user to the electronic display becomes larger.

An electronic display is provided, comprising a sensor configured to determine a user parameter of a user positioned before the display, a screen configured to display text or images to the user, and a processor configured to adjust a size of the text or images based on the determined user parameter.

In some embodiments, the user parameter is age.

In another embodiment, the user parameter is a distance from the user to the electronic display.

In some embodiments, the sensor comprises a camera.

In another embodiment, the electronic display comprises a computer monitor. In an additional embodiment, the electronic display comprises a cellular telephone. In some embodiments, the electronic display comprises a tablet computer.

A display device can be used with an ergonomic sensor comprising an imaging device interfaced to processing hardware to obtain and analyze image data depicting a user of the display device. The ergonomic sensor can be preconfigured with data indicating ergonomic uses of the display device so that the image of the user can be analyzed with minimal or no user calibration or setup. Instead, the ergonomic sensor can provide image data to be analyzed for use in providing real-time feedback, such as warnings or suggestions when the user's behavior falls outside an ergonomic use range for the display device. In some implementations, the ergonomic sensor is integrated with the display device, though in other implementations a separate element or preexisting imaging device can be used.

This example is discussed not to limit the present subject matter but to provide a brief introduction. Additional examples are described below in the Detailed Description. Objects and advantages of the present subject matter can be determined upon review of the specification and/or practice of an implementation according to one or more teachings herein.

HANDLING LOW LIGHT AND NON-UNIFORM LIGHT CONDITIONS

Good or natural lighting conditions for capturing digital images provide an object that appears to be illuminated evenly from all directions and without too much or too little light. Poor lighting conditions can include low-light, uneven light and no light conditions. Uneven light includes light that is directed from an angle that leaves an object such as a face slightly lighter on one side than another, e.g., left-right, top-bottom, along a diagonal, etc., or that simply includes one or more shadows somewhere on the object. Figure 2 illustrates an example of an image including a face taken under a low light condition, e.g., 30 lux. The face in the image illustrated at Figure 2 is both dimly lit and unevenly lit, i.e., one side of the face appears more dark than the other. Regions including the forehead, neck, one ear, end of nose and one cheek, although dark are somewhat discernible, while others such as the eyes, mouth and chin, torso or shirt, hair and one of the ears are approximately completely dark.

In general, low light conditions are such that an object such as a face may or may not be detectable and object/face tracking may be difficult to lock if at all, and regardless the image data contains less information than is desired. For example, in low light conditions, only certain regions of an object may be discernible while others are not, such as in Figure 2. In another example, one or more parameters may be insufficiently determinable, e.g., such as luminance, color, focus, tone reproduction, or white balance information, or face feature information such as whether a participant is smiling or blinking or partially occluded or otherwise shadowed. Some descriptions of poor lighting conditions, and certain solutions for handling them, can be found at US20080219517 and US20110102553, which are assigned to the same assignee and incorporated by reference.

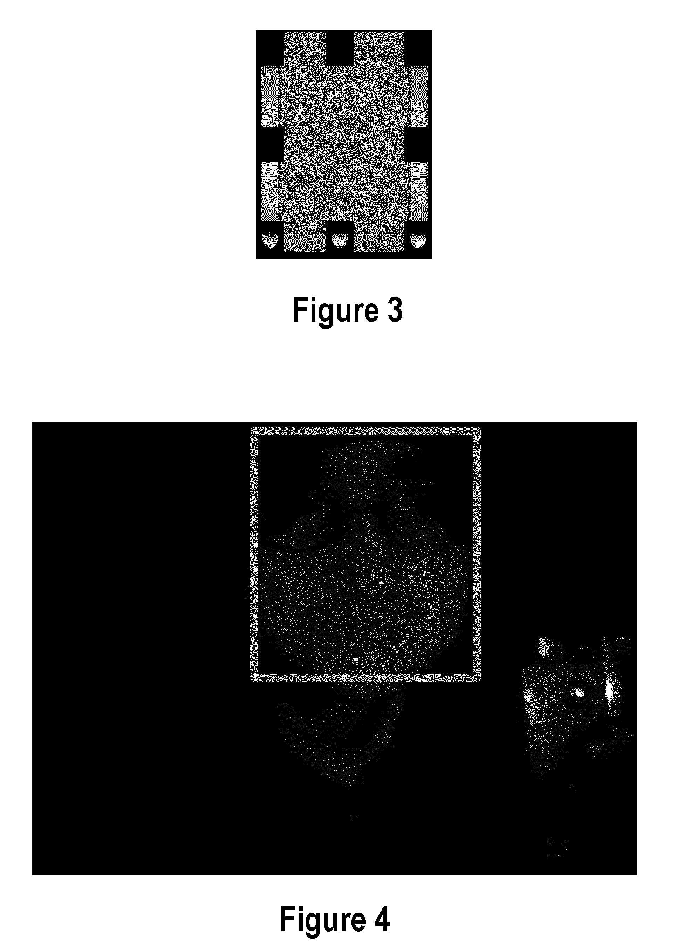

In no light conditions, the object (e.g., a face) is not even resolvable or detectable. No region nor parameter of the object is visually discernible by a person when there is no visible light available. Applicants' advantageous device that includes an infrared source and sensor in accordance with certain embodiments and described below with reference to Figures 3-4 is provided to enhance mobile video conferencing when lighting conditions are less than optimum.

Images captured under low or uneven lighting conditions will typically have shadowed/dark regions mixed with brighter regions and are generally not as pleasing to view as those captured under normal or optimal light conditions. In fact, unlike images captured in a professional photography studio, most pictures taken by people with smartphones and handheld consumer digital cameras are taken in various places with less than optimal lighting conditions. In certain embodiments, calibration images previously captured by the user, e.g., under better light conditions such as under normal or even optimum light levels, may be advantageously stored and then used to enhance, reconstruct or even replace certain image regions, features, parameters or characteristics such as skin tone, occluded or shadowed features, color balance, white balance, exposure, etc., that are not sufficiently discernible or desirable within captured images of a video stream that are repeatedly poorly lit.

Certain information from a current original image, e.g., face size, eye and lip movements, focus, tone, color, orientation, or relative or overall exposure, may be closely replicated to provide as close to a natural face appearance as possible using the skin tone (see, e.g., US patents 7,844,076, 7,460,695 and 7,315,631, which are incorporated by reference) and/or one or more other characteristics from the calibration images. US 20080219581, US 20110102638 and US 20090303343 are assigned to the same assignee and hereby incorporated by reference as providing further solutions for working with and enhancing low-light images that may be combined with certain embodiments expressly described herein. In certain embodiments, the background can also be replaced with an artificial background, or with a background extracted from an image taken with better lighting conditions, or with a blurry or arbitrary background.

Multiple embodiments described herein involve use of information and/or data from prior stored images to improve skin tone and/or other characteristics of objects such as face images viewed at either end of a video conference by any of the conference participants wherever they may be located. Efficient resource use of the handheld device is also described, e.g., by transmitting only audio and foreground face data with or without peripheral data, and particularly without background data as discerned from foreground data in accordance with embodiments described herein.

## ILLUMINATION OF LOW LIGHT OR NO LIGHT OBJECTS WITH INFRARED LIGHT

In certain embodiments, mobile video conferencing is advantageously enhanced, particularly with respect to images captured in low light conditions and non-uniform light conditions. In certain embodiments, use of an array, e.g., a ring, of well positioned infrared (IR) light emitting diodes (LEDs) that emit IR light and improve detection of a user's face in low/no light conditions using the reflected IR from the face. Figure 3 illustrates an example of a handheld device with one or more infrared emitters, e.g., a ring of infrared emitters. In other embodiments, only a single IR emitter is used, or two IR emitters are disposed one either side of the device left-right or top-bottom, or four are provided including one on each side of the device. Various arrangements are possible including facing IR emitters disposed on any of the six sides of the device, and they may be fixed or movable relative to the device.

These IR LEDs may have controlled current and hence controlled output power depending on parameters such as the distance of the face from the hand-held device. This feature also serves to advantageously reduce the power usage of existing flash based cameras. In further embodiments, the IR emitter is focused initially in a search mode, while constant focus is maintained on the face once tracked by the face tracker module of the device.

Illumination of the face with one or more infrared LEDs can provide improved detection of faces at short distances with a device equipped with an IR sensor that captures reflected IR light from the face or other target object. Figure 4 illustrates a face detected with a single infrared emitter at 40 cm without any external source of visible light, i.e., the face is completely dark at 0 lux without the infrared emitter.

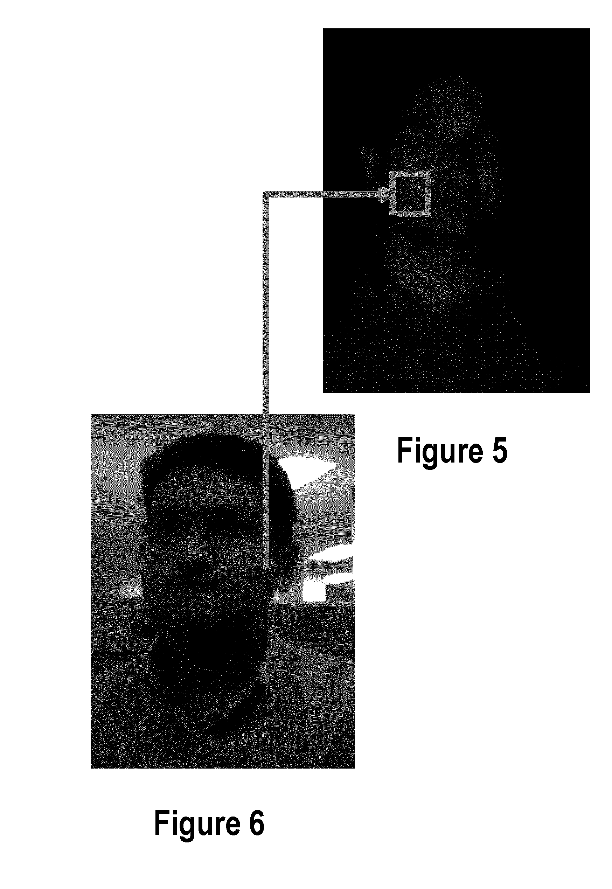

Calibration images previously captured by the user (following specific instructions) under optimum light levels may be used to reconstruct skin tone. Information from the current original image, such as face size and eye and lip movements may be closely replicated to provide as close to a natural face appearance as possible, using the skin tone for example, from one or more of the calibration images. Figure 5 illustrates an example of an image taken at low light condition, e.g., 30 lux, with painting of a patch of skin tone from a calibration image taken at a higher light level. Similarly the background can also be replaced with an artificial background and/or from an image taken with better lighting conditions. Figure 6 illustrates an example of a calibration image taken at higher light level than the image of Figure 5, and ideally at an optimum or normal light level.

BACKGROUND MOTION VERSUS FOREGROUND MOTION

When a mobile video conference participant uses a handheld device, the motion of the background is often greater or faster than the motion of the foreground relative to the camera lens/sensor. The foreground may include the face of the participant with or without any peripheral region such as hair, neck, torso, shirt, arm, hat, scarf, or other peripheral object or region, see US 20110081052 and US 20070269108, hereby incorporated by reference. The participant typically tries to hold his or her face still with respect to the camera lens/sensor. If the participant is successful in this effort, then the participant and camera lens/sensor may be at rest or move substantially or on average together, while the background may either be at rest or instead be moving relatively quickly relative to the camera lens/sensor.

By discerning objects moving quickly relative to the camera versus objects moving significantly slower, a device in accordance with certain embodiments is able to segment foreground from background objects and regions in an image being captured by the device. By only transmitting the foreground to one or more other video conference participants in accordance with certain embodiments, the device is more resource efficient, and the image data of the blurry moving background does not need to be otherwise processed beyond being simply discarded. Alternatively, blurry background images may be transmitted without further processing, as it may be desired to transmit only a blurry background, for example, to maintain privacy (see US serial number 12/883,192 by the same assignee, hereby incorporated by reference) and/or to avoid spending processing resources on background data.

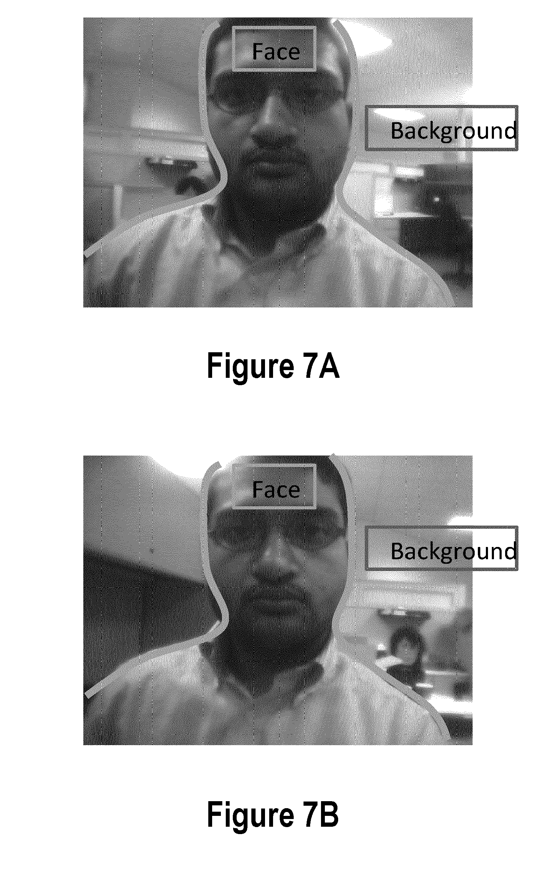

Figures 7a-7b illustrate a sequence of two images taken using a handheld camera with different backgrounds but similar face positions indicated by similar outline shape in both. As it may not be desired to transmit or view the background information by one, some or even all of the conference participants, then the device may advantageously forego resource intensive computing that would otherwise be involved in continuously providing changing background images including deblurring, color and white balance enhancement, and focus enhancement, among other image processing that may otherwise be desired to provide viewable images. Those image enhancement are instead better spent on the image data that is actually desired, for example, conference participant faces.

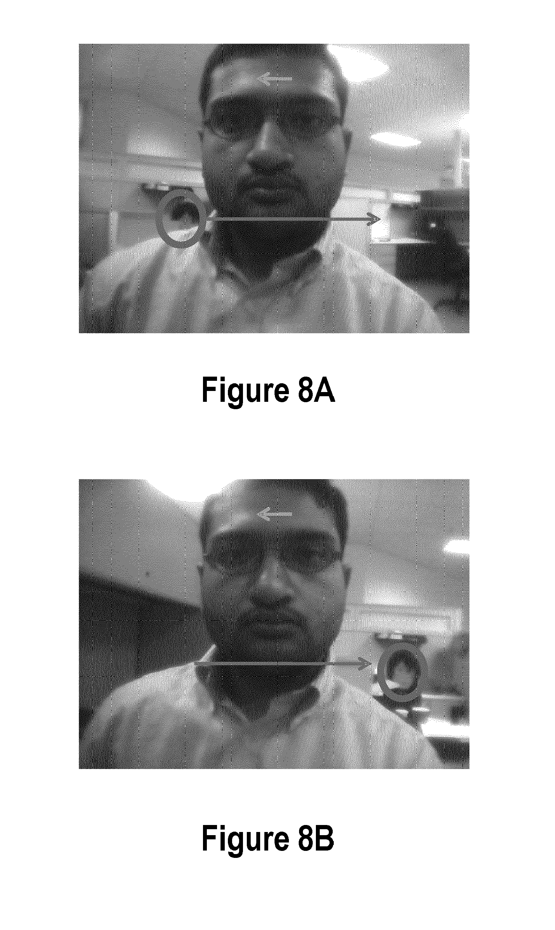

Figures 8a-8b illustrate the sequence of two images of Figures 7a-7b, except this time with motion vector arrows indicating motion directions and magnitudes of the background versus foreground face objects in an exemplary mobile video conferencing environment. The camera is able to discern foreground from background using motion vector information.

APPLICATIONS OF SEGMENTATION OF BACKGROUND VERSUS FACE FOR RICH MOBILE VIDEO CONFERENCING

In a mobile video conferencing environment, users typically try to keep the mobile device as stable as possible and directed at his or her face. However, as both the device and user may be moving in this environment, the background will often be varying rapidly from frame to frame. Hence, the foreground (e.g., face) will be often relatively stable as compared to the background, except if the person is still, in which case both the background and the foreground will be approximately equally stable. The volatile background data is segmented from the foreground data to greatly enhance the efficiency of the device in a mobile video conferencing environment.

Using this understanding of the difference in motion of the foreground and background, differentiating the stability of background versus foreground and optionally also using specific information about the user such as face recognition, blemish correction, skin tone, eye color, face beautification, or other user-selected or automatic image processing that is user specific, since mobile devices are mostly single user devices, background versus foreground differentiation algorithms are provided in accordance with embodiments that are efficient and are used to suit the needs of mobile video conferencing. The following are hereby incorporated by reference as describing various examples of some of these techniques: US 20100026831, US 20090080796, US 20110064329, US 20110013043, US 20090179998, US 20100066822, US 20100321537, US 20110002506, US 20090185753, US 20100141786, US 20080219517, US 20070201726, US 20110134287, US 20100053368, US 20100054592, and US 20080317378, and US serial number 12/959,151, field Dec 2, 2010 by the same assignee US 20090189997. Advantageously, the motion vectors of the different objects/pixels in the image are used to help decide whether an object belongs to the background or the foreground, e.g., so that resources can be efficiently allocated.

In certain embodiments, a candidate for the foreground region can be used to expedite face recognition, face tracking or face detection by focusing on just that candidate region. Moreover, as a typical mobile device is mostly used by a single user, prior calibration images may be used to expedite face recognition, face detection and image enhancement and to reinforce background separation, e.g., separation of a foreground face from non-face data.

Once the foreground (e.g., face extent) is detected, the background can be replaced with a user's preference of background in certain embodiments. This provides an efficient implementation of background using an efficient foreground/background separation method in the case of mobile video conferencing applications.

As the relatively unimportant background information will typically change more rapidly compared to the known user's face, background information would otherwise involve more bandwidth usage to transmit to the other end of the mobile video conference room. Advantageously, efficient usage of bandwidth is provided herein for mobile video conferencing by detecting and transmitting only the compressed face and/or other foreground information.

Once the foreground is detected and transmitted, the background can be replaced with a user's preference at the receiving end or other automatically selected data. An efficient implementation of background replacement is provided due to the advantageous separation method. In addition, improved compression performance is provided due to the skin tone of the face being maintained substantially constant even when the lighting conditions are changing. This improves bandwidth efficiency for mobile video conferencing. Background versus face or other foreground differentiation is based in certain embodiments on analysis of differences between the motion vectors of objects in the image taken in the mobile video conferencing environment. Other foreground/background segmentation techniques may be used instead of or in combination with this technique, as described in several of the patent applications by the same assignee incorporated by reference herein.

United States patents 7,953,287 and 7,469,071 are incorporated by reference and include descriptions of embodiments involving foreground/background segmentation and deliberate background blurring. U.S. patents 7,868,922, 7,912,285, 7,957,597, 7,796,822, 7,796,816, 7,680,342, 7,606,417, and 7,692,696, and US 20070269108, are incorporated by reference as describing foreground/background segmentation techniques. U.S. patents 7,317,815 and 7,564,994 relate to face tools and face image workflow and are also incorporated by reference. US Patents 7,697,778 and 7,773,118, and US 20090167893, US 20090080796, US 20110050919, US 20070296833, US 20080309769 and US 20090179999 and USSN 12/941,983 are incorporated by reference as containing descriptions of embodiments relating to motion and/or low or uneven light compensation in digital images. US 20080205712 and US 20090003661 are incorporated by reference as containing descriptions relating to separating a directional lighting variability in statistical face modeling based on texture space decomposition, and US 20080219517 is incorporated by reference as containing descriptions of embodiments relating to illumination detection using classifier chains.

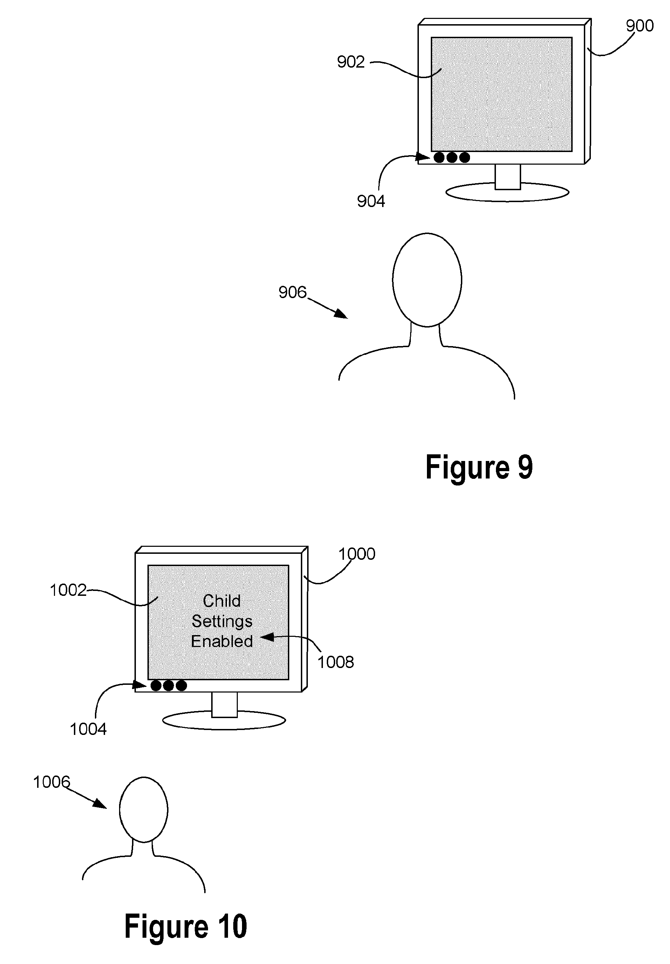

## SMART DISPLAY WITH DYNAMIC FACE-BASED USER PREFERENCE SETTINGS [Figures 9-17]

Techniques and methods are provided to adjust user preference settings based on parameters or conditions detected by an electronic display system or monitor. In some embodiments, the display system can detect and/or determine an age of a user. In another embodiment, the display system can detect and/or determine a distance between the user and the display. In yet another embodiment, the display system can detect and/or determine ambient light or the amount of light on a face of the user, either alone or in combination with the age or distance conditions detected above. In some embodiments, the display system can recognize a user's face, and can additionally recognize a user's gaze or determine the pupil diameter of the user.

Any number of user preferences or display settings can be dynamically adjusted based on the parameter or condition detected or determined by the display. For example, in one embodiment, displayable content or user privacy settings can be adjusted based on the detected age of the user. In another embodiment, the type of content or files able to be displayed can be limited based on the detected age of the user. In some embodiments, specific users are recognized individually, and displayable content and/or privacy settings can be individually tailored to the specific individual recognized by the display. In some embodiments, a user timer can determine when a predetermined time limit has been surpassed, and indicate to the user to discontinue use of the display. Additionally, the display can indicate to the user when the user is sitting or tilting in a way that can cause injury, pain, or discomfort. In some embodiments, the brightness of the screen can be automatically adjusted based on the detected age of the user, the pupil diameter of the user, the ambient light surrounding the user or on the user's face, the distance between the user and the display, or any logical combination of all the preceding conditions.

Figure 9 illustrates a display 900, such as a computer monitor, a television display, a cellular telephone display, a tablet display, or a laptop computer display, having a screen 902 and a plurality of sensors 904. The sensors can include, for example, an imaging sensor such as a camera including a CCD or CMOS sensor, a flash or other form of illumination, and/or any other sensor configured to detect or image objects, such as ultrasound, infrared (IR), heat sensors, or ambient light sensors. The sensors can be disposed on or integrated within the display, or alternatively, the sensors can be separate from the display. Any number of sensors can be included in the display. In some embodiments, combinations of sensors can be used. For example, a camera, a flash, and an infrared sensor can all be included in a display in one embodiment. It should be understood that any combination or number of sensors can be included on or near the display. As shown in Figure 9, user 906 is shown positioned before the display 900, within detection range or field of view of the sensors 904.

Various embodiments involve a camera mounted on or near a display coupled with a processor programmed to detect, track and/or recognize a face or partial face, or a face region, such as one or two eyes, or a mouth region, or a facial expression or gesture such as smiling or blinking. In some embodiments, the processor is integrated within or disposed on the display. In other embodiments, the processor is separate from the display. The processor can include memory and software configured to receive signals from the sensors and process the signals. Certain embodiments include sensing a user or features of a user with the sensors and determining parameters relating to the face based such as orientation, pose, tilt, tone, color balance, white balance, relative or overall exposure, face size or face region size including size of eyes or eye regions such as the pupil, iris, sclera or eye lid, a focus condition, and/or a distance between the camera or display and the face. In this regard, the following are hereby incorporated by reference as disclosing alternative embodiments and features that may be combined with embodiments or features of embodiments described herein: United States Patent Application Nos. 13/035,907, filed February 25, 2011, 12/883,183, filed September 16, 2010 and 12/944,701, filed November 11, 2010, each by the same assignee, and United States Pat. Nos. 7,853,043, 7,844,135, 7,715,597, 7,620,218, 7,587,068, 7,565,030, 7,564,994, 7,558,408, 7,555,148, 7,551,755, 7,460,695, 7,460,694, 7,403,643, 7,317,815, 7,315,631, and 7,269,292.

Many techniques can be used to determine the age of a user seated in front of a display or monitor. In one embodiment, the age of the user can be determined based on the size of the user's eye, the size of the user's iris, and/or the size of the user's pupil.

Depending on the sensors included in the display, an image or other data on the user can be acquired by the display with the sensors, e.g., an image of the user. Meta-data on the acquired date, including the distance to the user or object, the aperture, CCD or CMOS size, focal length of the lens and the depth of field, can be recorded on or with the image at acquisition. Based on this information, the display can determine a range of potential sizes of the eye, the iris, the pupil, or red eye regions (if a flash is used).

The variability in this case is not only for different individuals, but also variability based on age. Luckily, in the case of eyes, the size of the eye is relatively constant as a person grows from a baby into an adult. This is the reason of the striking effect of "big eyes" that is seen in babies and young children. The average infant's eyeball measures approximately 19.5 millimeters from front to back, and as described above, grows to 24 millimeters on average during the person's lifetime. Based on this data, in the case of eye detection, the size of an object in the field of view which could be a pupil (which is part of the iris), is limited, allowing some variability to be:

$$9 \text{ mm} \leq \text{Size Of Iris} \leq 13 \text{ mm}$$

As such, by detecting or determining the size of the eye of a user relative to other facial features with sensors 904, the age of the user can be calculated. Further details on the methods and processes for determining the age of a user based on eye, iris, or pupil size can be found in US Pat. No. 7,630,006 to DeLuca et al.

In another embodiment, human faces may be detected and classified according to the age of the subjects (see, e.g., U.S. Pat. No. 5,781,650 to Lobo et al.). A number of image processing techniques may be combined with anthropometric data on facial features to determine an estimate of the age category of a particular facial image. In a preferred embodiment, the facial features and/or eye regions are validated using anthropometric data within a digital image. The reverse approach may also be employed and may involve a probability inference, also known as Bayesian Statistics.

In addition to determining the age of the user, the display can also determine or detect the distance of the user to the display, the gaze, or more specifically, the location and direction upon which the user is looking, the posture or amount of head tilt of the user, and lighting levels including ambient light and the amount of brightness on the user's face. Details on how to determine the distance of the user from the display, the gaze of the user, the head tilt or direction, and lighting levels are also found in U.S. Pat. No. 7,630,006 to DeLuca et al., and U.S. Appln. No. 13/035,907.

Distance can be easily determined with the use of an IR sensor or ultrasound sensor. In other embodiments, an image of the user can be taken with a camera, and the distance of the user can be determined by comparing the relative size of the detected face to the size of detected features on the face, such as the eyes, the nose, the lips, etc. In another embodiment, the relative spacing of features on the face can be compared to the detected size of the face to determine the distance of the user from the sensors. In yet another embodiment, the focal length of the camera can be used to determine the distance of the user from the display, or alternatively the focal length can be combined with detected features such as the size of the face or the relative size of facial features on the user to determine the distance of the user from the display.

In some embodiments, determining the gaze of the user can include acquiring and detecting a digital image including at least part of a face including one or both eyes. At least one of the eyes can be analyzed, and a degree of coverage of an eye ball by an eye lid can be determined. Based on the determined degree of coverage of the eye ball by the eye lid, an approximate direction of vertical eye gaze can be determined. The analysis of at least one of the eyes may further include determining an approximate direction of horizontal gaze. In some embodiments, the technique includes initiating a further action or initiating a different action, or both, based at least in part on the determined approximate direction of horizontal gaze. The analyzing of the eye or eyes may include spectrally analyzing a reflection of light from the eye or eyes. This can include analyzing an amount of sclera visible on at least one side of the iris. In other embodiments, this can include calculating a ratio of the amounts of sclera visible on opposing sides of the iris.

In some embodiments, the digital image can be analyzed to determine an angular offset of the face from normal, and determining the approximate direction of vertical eye gaze based in part on angular offset and in part on the degree of coverage of the eye ball by the eye lid.

Some embodiments include extracting one or more pertinent features of the face, which are usually highly detectable. Such objects may include the eyes and the lips, or the nose, eye brows, eye lids, features of the eye such as pupils, iris, and/or sclera, hair, forehead, chin, ears, etc. The combination of two eyes and the center of the lips, for example can create a triangle which can be detected not only to determine the orientation (e.g., head tilt) of the face but also the rotation of the face relative to a facial shot. The orientation of detectible features can be used to determine an angular offset of the face from normal. Other highly detectible portions of the image can be labeled such as the nostrils, eyebrows, hair line, nose bridge, and neck as the physical extension of the face.

Ambient light can be determined with an ambient light sensor, or a camera. In other embodiments, ambient light can be determined based on the relative size of a user's pupils to the size of their eyes or other facial features.

With these settings or parameters detected by the display, including age, eye, pupil, and iris size, distance from the display, gaze, head tilt, and/or ambient lighting, any number of user preference settings can be dynamically adjusted or changed to accommodate the specific user and setting.

In one embodiment, displayable content and privacy settings can be automatically changed based on a detected age of the user. Referring to Figure 10, upon detection of a child or young adult in front of the display 1000, a prompt or symbol 1008 can be displayed to indicate that a child or young adult has been detected and the appropriate displayable content and privacy settings have been enabled for display. In one embodiment, if a child or young adult is detected in front of the display, pre-set privacy and filtering options (i.e., programmed or chosen by an adult or administrator) can be enabled to control the type of content shown on display 1000. For example, web-browser filtering can be strengthened to prevent a young user from encountering material or content deemed by a parent or administrator to be age inappropriate (e.g., pornography, foul language, violence, etc.).

Determination of what age groups constitute a "child", a "young adult", and "adult", or an "elderly" person can be pre-programmed or chosen by an administrator. In some embodiments, however, a child can be a person under the age of 15, a young adult can be a person from ages 15-17, an adult can be a person from ages 18-65, and an elderly person can be a person older than age 65.

Additionally, content already contained upon a computer attached to the display can be deemed non-displayable depending on the age or class of user detected. For example, private financial files, photographs, videos, or other sensitive documents or data can automatically become inaccessible or non-displayable if the user before the display is determined to be too young. As described above, the age limit cutoff for determining if data is inaccessible or non-displayable can be pre-programmed or chosen by an administrator.

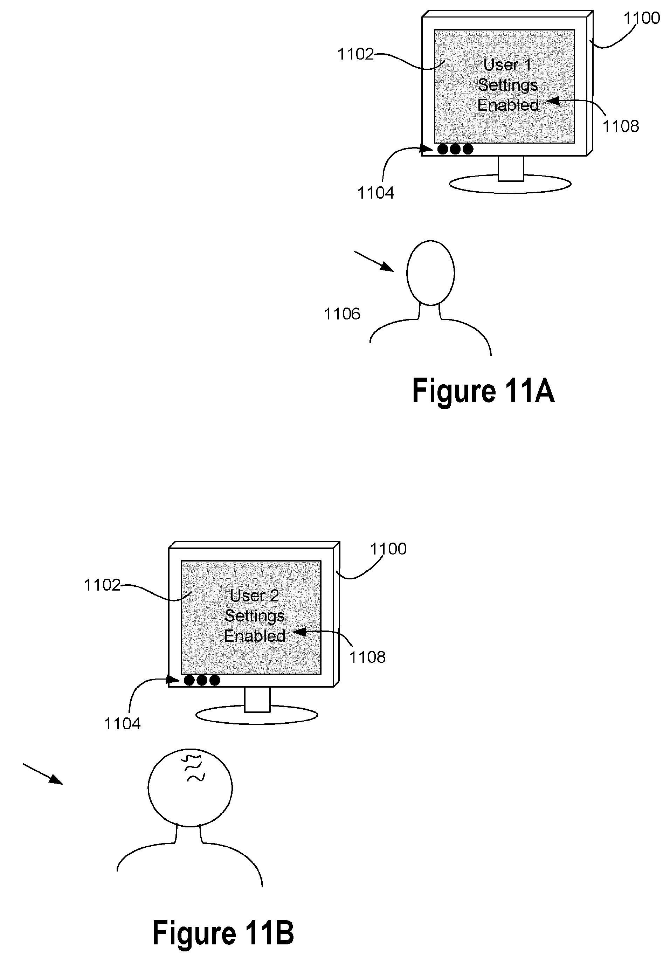

In addition to changing displayable content and/or privacy settings based on the detected age of the user, in some embodiments the display can detect or recognize specific individual users and adjust the displayable content, privacy settings, and/or personal settings based on the individual user detected. Referring to Figure 11A, a first user (e.g., User 1) is recognized by the display and that user's individual user preferences, displayable content, and privacy settings are automatically loaded on the display as indicated by prompt 108. Similarly, in Figure 11B, a second user (e.g., User 2) is recognized by the display and that user's individual user preferences, displayable content, and privacy settings are automatically loaded on the display as indicated by prompt 1108. Since these settings can be customized, either by the user or by someone else (e.g., a parent or administrator), it should be understood that User 1's settings may be different than the settings of User 2. For example, an administrator can change the user displayable content and privacy settings for all potential users of the system, and can input photos of each user or other recognizable features for each potential user. When the users are positioned before the display, the display can take an image of the user and compare it to the known users of the system, and automatically adjust the displayable content and privacy settings based on the detected user.

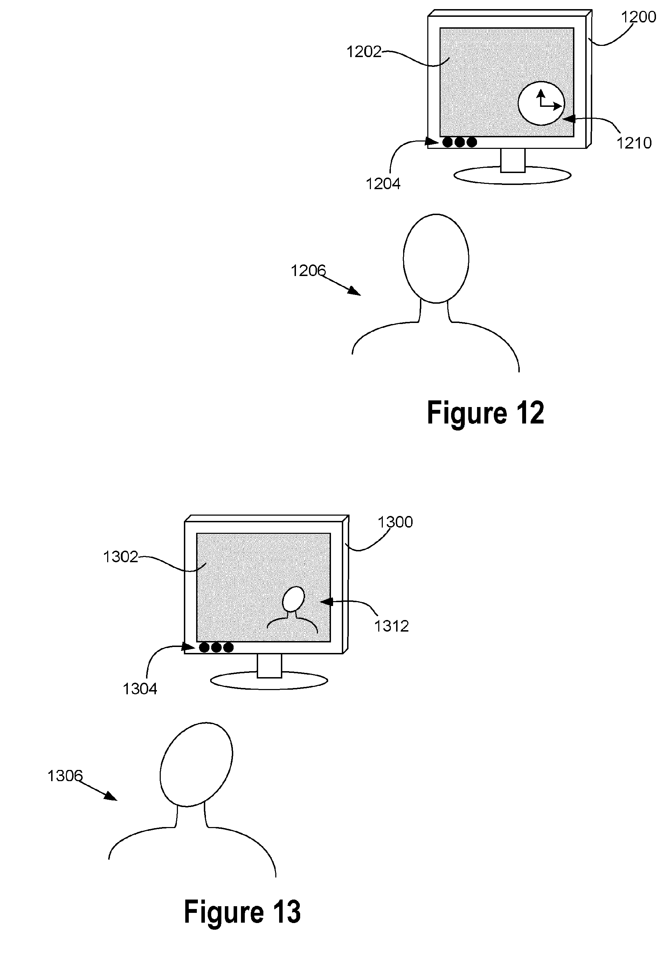

Figure 12 is an illustration of a user in the field of view of a display with a user timer. In this embodiment, the display can detect the presence of a user positioned before the display for a predetermined time limit, and indicate to the user with a prompt or symbol 1208 that the user has exceeded the predetermined time limit in front of the display. This can be used, for example, to limit the amount of time a user spends in front of the display, or to encourage frequent breaks (e.g., for exercise, to reduce eye strain, etc.). In some embodiments, the predetermined time limit can be varied depending on the age of the user detected by the display. For example, a parent may wish to limit the amount of time a child spends in front of the display. In this example, if the display detects the user to be a child, then after the predetermined time limit the indicator or symbol can be displayed to encourage the user to stop using the display. In another embodiment, a user timer indicator or symbol 1210 can encourage the user to take a short break, such as to comply with local, state, or federal rules requiring employee breaks after a certain amount of time. In some embodiments, the display can be automatically turned off after reaching the predetermined time limit. Additionally, the display can remain off for programmed duration to prevent further use (e.g., until the next day, or until a pre-set period of time has passed before the display can be used again).

In addition to determining whether a user has exceeded a predetermined time limit in front of the display, the display can also determine if the user is sitting improperly or tilting his or her head in a way that may lead to injury or discomfort. For example, referring to Figure 13, the display may detect or determine that the user 1306 is gazing at the display with poor posture or with a tilted head, which may potentially lead to pain, cramps, or other discomfort. An improper head tilt can be determined to be an angular tilting of the head offset from a normal or vertical head posture. In this instance, the display can show an ergonomic indicator or symbol 1312 to notify or indicate to the user to correct his or her improper posture or head tilt. This feature may be able to correct improper posture or head tilt in an otherwise unaware user, preventing future pain, discomfort, or injuries.

The face detection, eye detection, distance, and age determinations described above can further be used in combination with light detection (e.g., ambient light detection or illumination level of the face of the user) for changing or adjusting additional user preference settings. In one embodiment, display brightness can be changed based on the amount of ambient light detected by the display. Furthermore, it may be determined that an older user requires a brighter screen than a younger user, so brightness of the screen can be automatically adjusted depending on the detected age of the user. In another embodiment, the ambient light is detected based on a detected brightness of the face. In yet another embodiment, the display can detect a pupil closure percentage and combine it with an illumination level on the face and/or the background ambient light level to determine the brightness level of the screen.

For example, if a light is shining in a user's face, then the user's pupils will be more closed and he or she will need a brighter screen. In this example, the screen can be automatically brightened based on the illumination level of the user's face and/or the size of the user's pupils. On the other hand, if there is high ambient light in the background of the user, but not in the user's face, then the user's pupils will be more open, yet the screen may be adequately lit already by the background light and no adjustments may need to be made. In yet another scenario, both the face of the user and the background of the user are dark or have low ambient light, then a bright screen may again be needed and the brightness of the display can be automatically increased or adjusted to compensate.

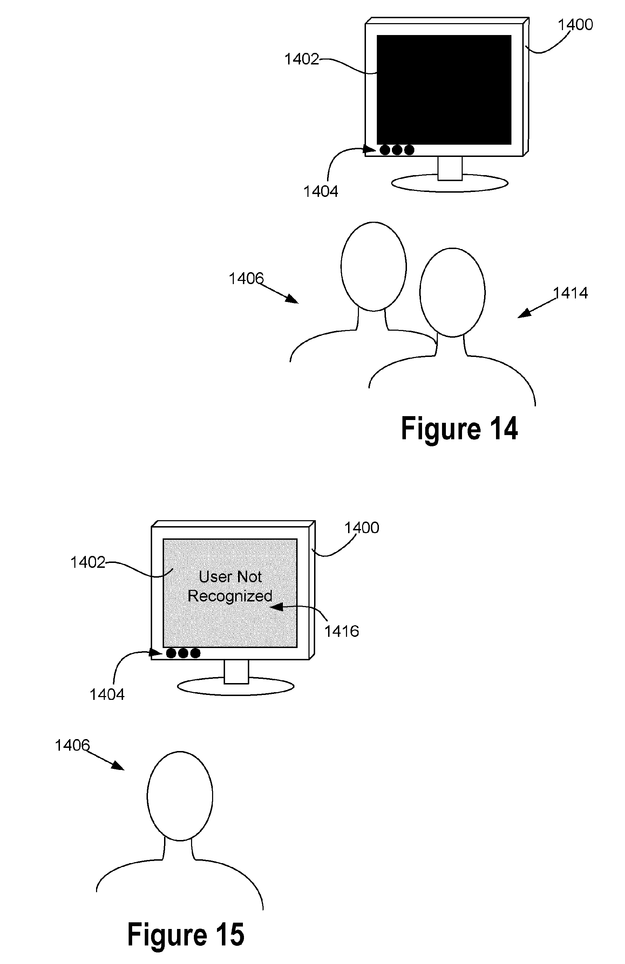

In yet another embodiment, user or screen privacy can be adjusted when an additional person enters the field of view of the sensors, or when an unrecognized user enters the field of view. In the first embodiment, as shown in Figure 14, the screen 1402 of the display 1400 can be turned off when a second user 1414 enters the field of view along with user 1406. Similarly, referring to Figure 15, if a user 1506 is not recognized by the display, an indicator or symbol 1516 can be displayed on the display to indicate to the user that he or she is not recognized. In this embodiment, the display can be programmed to automatically shut off after displaying the indicator 1516, or alternatively, can display a lock screen until a recognized user enters the field of view or until the unknown user 1506 is given access to the system.

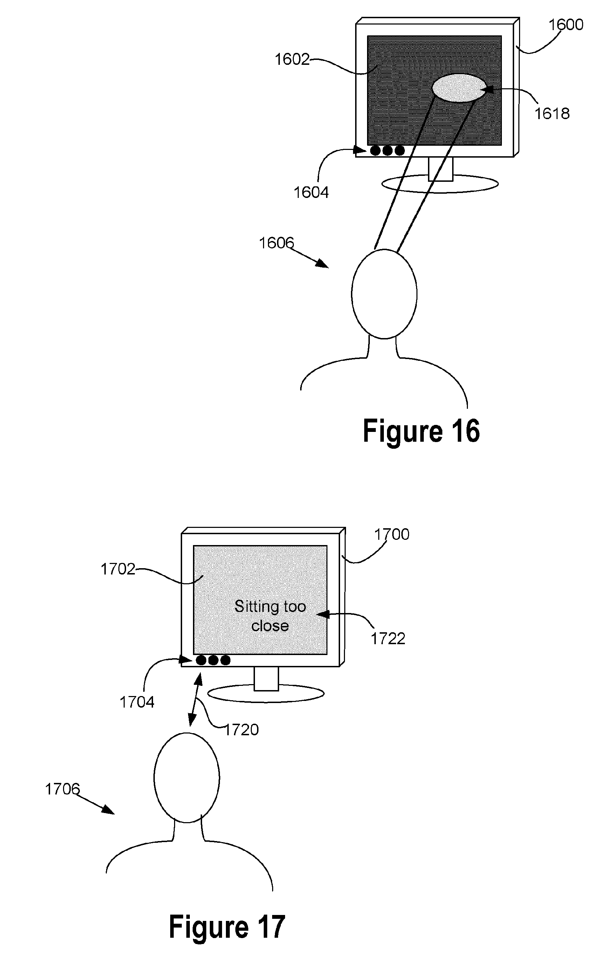

In yet an additional embodiment, the display can follow the user's gaze and illuminate only the section 1518 of the screen that corresponds to the user's gaze, as shown in Figure 16. The display can also self-calibrate itself based on a user's eye movement across the screen while reading multiple lines of text and illuminate the appropriate sections of the screen based on the user's reading speed.

In yet another embodiment, shown in Figure 17, the display 1700 can indicate to a user 1706 with indicator or icon 1722 when the user is sitting too close to the display (i.e., when the display detects that the user is positioned closer to the display than an optimal viewing distance).

In some embodiments, the display can automatically adjust the brightness of the display or turn on/off the display completely to save power based on the detected user settings.

The system can also include features for power saving based on the user detected features described above. The power saving process can include multiple steps. For example, if the display does not recognize a face and/or both eyes in front of the display for a predetermined period of time, the display can initiate a power savings protocol. In one embodiment, a first level of power saving can be initiated. For example, a first level of power savings can be to dim the display by a set percentage when a user is not detected in front of the display for the predetermined period of time. If the display continues to not detect the user's face and/or eyes for an additional period of time, the display can be powered down completely. This process can have multiple intermediate power level steps that are configurable by an administrator of the system based on individual power savings goals.

In another embodiment, the entire sensor system and processor of the display system can be turned off with the display when it enters a power savings mode. The sensors and processor can be configured to turn on once in a while (e.g., to turn on briefly after a predetermined period of time has lapsed), scan for a face and/or eyes, and turn back off if a user and/or eyes are not detected. This can be a very useful in a software only implementation where the software is running on a power hungry processor.

SMART DISPLAY WITH DYNAMIC FONT MANAGEMENT

[Figures 18-21]

Techniques and methods are provided to adjust user preference settings based on parameters or conditions detected by a display system or monitor device. In some embodiments, the display system can detect and/or determine an age of a user. In another embodiment, the display system can detect and/or determine a distance between the user and the display. In yet another embodiment, the display system can detect and/or determine ambient light or the amount of light on a face of the user, either alone or in combination with the age or distance conditions detected above. In some embodiments, the display system can recognize a user's face, and can additionally recognize a user's gaze or determine the pupil diameter of the user.

Any number of user preferences or display settings can be dynamically adjusted based on the parameter or condition detected or determined by the display. For example, in one embodiment, font size or icon size can be adjusted based on the detected age of the user. In another embodiment, the font size or icon size can be adjusted based on the detected distance of the user from the display. In some embodiments, specific users are recognized individually, and font or icon size can be individually tailored to the specific individual recognized by the display.

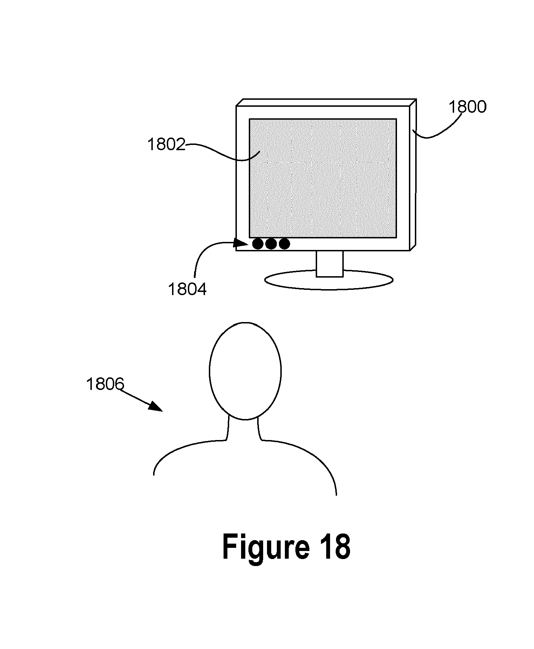

Figure 18 illustrates a display 1800, such as a computer monitor, a television display, a cellular telephone display, a tablet display, or a laptop computer display, having a screen 1802 and a plurality of sensors 1804. The sensors can include, for example, an imaging sensor such as a camera including a CCD or CMOS sensor, a flash or other form of illumination, and/or any other sensor configured to detect or image objects, such as ultrasound, infrared (IR), or heat sensors. The sensors can be disposed on or integrated within the display, or alternatively, the sensors can be separate from the display. Any number of sensors can be included in the display. In some embodiments, combinations of sensors can be used. For example, a camera, a flash, and an infrared sensor can all be included in a display in one embodiment. It should be understood that any combination or number of sensors can be included on or near the display. As shown in Figure 18, user 1806 is shown positioned before the display 1800, within detection range or field of view of the sensors 1804.

Various embodiments involve a camera mounted on or near a display coupled with a processor programmed to detect, track and/or recognize a face or partial face, or a face region, such as one or two eyes, or a mouth region, or a facial expression or gesture such as smiling or blinking. In some embodiments, the processor is integrated within or disposed on the display. In other embodiments, the processor is separate from the display. The processor can include memory and software configured to receive signals from the sensors and process the signals. Certain embodiments include sensing a user or features of a user with the sensors and determining parameters relating to the face such as orientation, pose, tilt, tone, color balance, white balance, relative or overall exposure, face size or face region size including size of eyes or eye regions such as the pupil, iris, sclera or eye lid, a focus condition, and/or a distance between the camera or display and the face. In this regard, the following are hereby incorporated by reference as disclosing alternative embodiments and features that may be combined with embodiments or features of embodiments described herein: United States Patent Application Nos. 13/035,907, filed February 25, 2011, 12/883,183, filed September 16, 2010 and 12/944,701, filed November 11, 2010, each by the same assignee, and United States Pat. Nos. 7,853,043, 7,844,135, 7,715,597, 7,620,218, 7,587,068, 7,565,030, 7,564,994, 7,558,408, 7,555,148, 7,551,755, 7,460,695, 7,460,694, 7,403,643, 7,317,815, 7,315,631, and 7,269,292.

Many techniques can be used to determine the age of a user seated in front of a display or monitor. In one embodiment, the age of the user can be determined based on the size of the user's eye, the size of the user's iris, and/or the size of the user's pupil.

Depending on the sensors included in the display, an image or other data on the user can be acquired by the display with the sensors, e.g., an image of the user. Meta-data on the acquired date, including the distance to the user or object, the aperture, CCD or CMOS size, focal length of the lens and the depth of field, can be recorded on or with the image at acquisition. Based on this information, the display can determine a range of potential sizes of the eye, the iris, the pupil, or red eye regions (if a flash is used).

The variability in this case is not only for different individuals, but also variability based on age. Luckily, in the case of eyes, the size of the eye is relatively constant as a person grows from a baby into an adult, this is the reason of the striking effect of "big eyes" that is seen in babies and young children. The average infant's eyeball measures approximately 19.5 millimeters from front to back, and as described above, grows to 24 millimeters on average during the person's lifetime. Based on this data, in case of eye detection, the size of the object which is the pupil which is part of the iris, is limited, when allowing some variability to be:

$$9 \text{ mm} \leq \text{Size Of Iris} \leq 13 \text{ mm}$$

As such, by detecting or determining the size of the eye of a user with sensors 1804, the age of the user can be calculated. Further details on the methods and processes for determining the age of a user based on eye, iris, or pupil size can be found in US Pat. No. 7,630,006 to DeLuca et al.

In another embodiment, human faces may be detected and classified according to the age of the subjects (see, e.g., U.S. Pat. No. 5,781,650 to Lobo et al.). A number of image processing techniques may be combined with anthropometric data on facial features to determine an estimate of the age category of a particular facial image. In a preferred embodiment, the facial features and/or eye regions are validated using anthropometric data within a digital image. The reverse approach may also be employed and may involve a probability inference, also known as Bayesian Statistics.

In addition to determining the age of the user, the display can also determine or detect the distance of the user to the display, the gaze, or more specifically, the location and direction upon which the user is looking, the posture or amount of head tilt of the user, and lighting levels including ambient light and the amount of brightness on the user's face. Details on how to determine the distance of the user from the display, the gaze of the user, the head tilt or direction, and lighting levels are also found in U.S. Pat. No. 7,630,006 to DeLuca et al., and U.S. Appln. No. 13/035,907.

Distance can be easily determined with the use of an IR sensor or ultrasound sensor. In other embodiments, an image of the user can be taken with a camera, and the distance of the user can be determined by comparing the relative size of the detected face to the size of detected features on the face, such as the eyes, the nose, the lips, etc. In another embodiment, the relative spacing of features on the face can be compared to the detected size of the face to determine the distance of the user from the sensors. In yet another embodiment, the focal length of the camera can be used to determine the distance of the user from the display, or alternatively the focal length can be combined with detected features such as the size of the face or the relative size of facial features on the user to determine the distance of the user from the display.

In some embodiments, determining the gaze of the user can include acquiring and detecting a digital image including at least part of a face including one or both eyes. At least one of the eyes can be analyzed, and a degree of coverage of an eye ball by an eye lid can be determined. Based on the determined degree of coverage of the eye ball by the eye lid, an approximate direction of vertical eye gaze can be determined. The analysis of at least one of the eyes may further include determining an approximate direction of horizontal gaze. In some embodiments, the technique includes initiating a further action or initiating a different action, or both, based at least in part on the determined approximate direction of horizontal gaze. The analyzing of the eye or eyes may include spectrally analyzing a reflection of light from the eye or eyes. This can include analyzing an amount of sclera visible on at least one side of the iris. In other embodiments, this can include calculating a ratio of the amounts of sclera visible on opposing sides of the iris.

In some embodiments, the digital image can be analyzed to determine an angular offset of the face from normal, and determining the approximate direction of vertical eye gaze based in part on angular offset and in part on the degree of coverage of the eye ball by the eye lid.

Some embodiments include extracting one or more pertinent features of the face, which are usually highly detectable. Such objects may include the eyes and the lips, or the nose, eye brows, eye lids, features of the eye such as pupils, iris, and/or sclera, hair, forehead, chin, ears, etc. The combination of two eyes and the center of the lips, for example can create a triangle which can be detected not only to determine the orientation (e.g., head tilt) of the face but also the rotation of the face relative to a facial shot. The orientation of detectible features can be used to determine an angular offset of the face from normal. Other highly detectible portions of the image can be labeled such as the nostrils, eyebrows, hair line, nose bridge, and neck as the physical extension of the face.

Ambient light can be determined with an ambient light sensor, or a camera. In other embodiments, ambient light can be determined based on the relative size of a user's pupils to the size of their eyes or other facial features.

With these settings or parameters detected by the display, including age, eye, pupil, and iris size, distance from the display, gaze, head tilt, and/or ambient lighting, any number of user preference settings can be dynamically adjusted or changed to accommodate the specific user and setting. Determination of what age groups constitute a "child", a "young adult", and "adult", or an "elderly" person can be pre-programmed or chosen by an administrator. In some embodiments, however, a child can be a person under the age of 15, a young adult can be a person from ages 15-17, an adult can be a person from ages 18-65, and an elderly person can be a person older than age 65.

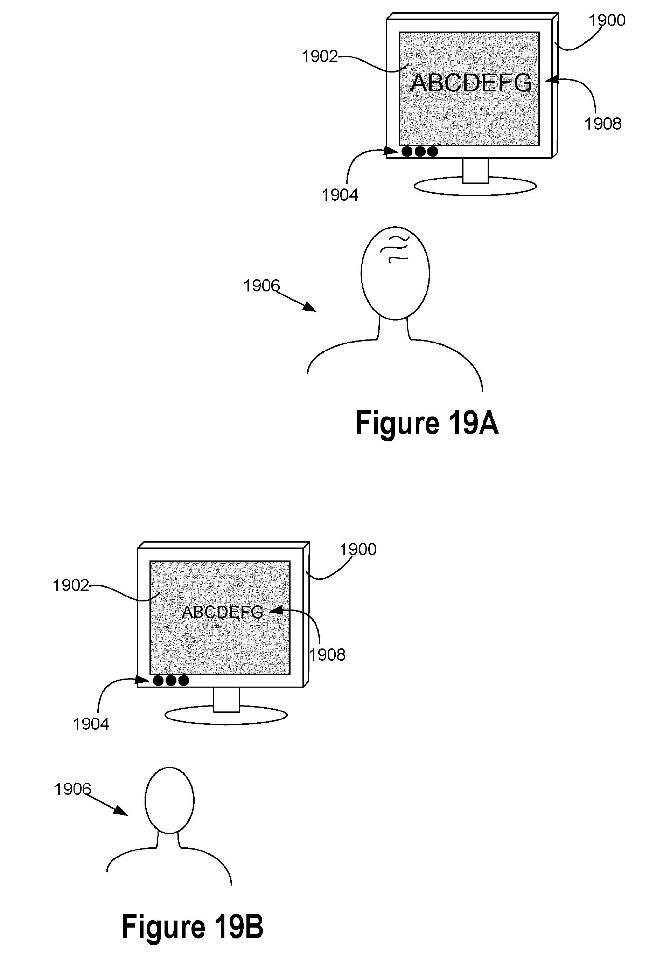

In one embodiment, the size of the font displayed on display 1800 can be dynamically changed based on a detected age of the user. Referring now to Figures 19A-19B, in Figure 19A the user 1906 is detected as an older user, and as such, the size of font 1908 can be automatically increased based on the age determination of the user. Similarly, in Figure 19B, the user is detected as a younger user, and therefore the size of the font 1908 can be automatically decreased based on the age determination of the user.

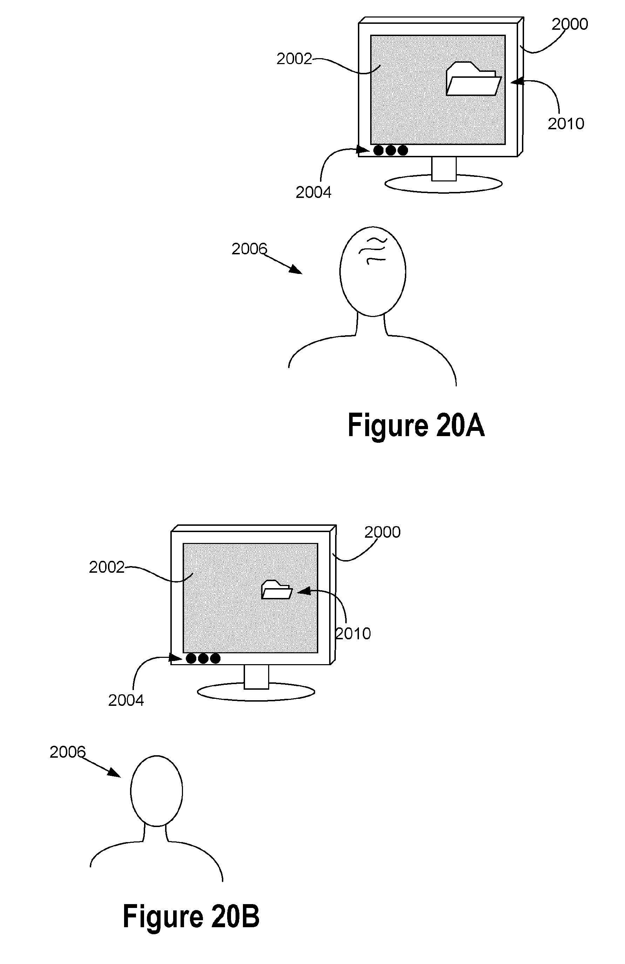

Similarly, in addition to dynamically changing the size of fonts based on the detected age of the user, the display can also automatically change the size of system icons based on the age determination of the user. Referring to Figures 20A-20B, in Figure 20A the user 2006 is detected as an older user, and as such, the size of system icons 2010 can be automatically increased based on the age determination of the user. Similarly, in Figure 20B, the user is detected as a younger user, and therefore the size of the system icons 2010 can be automatically decreased based on the age determination of the user.

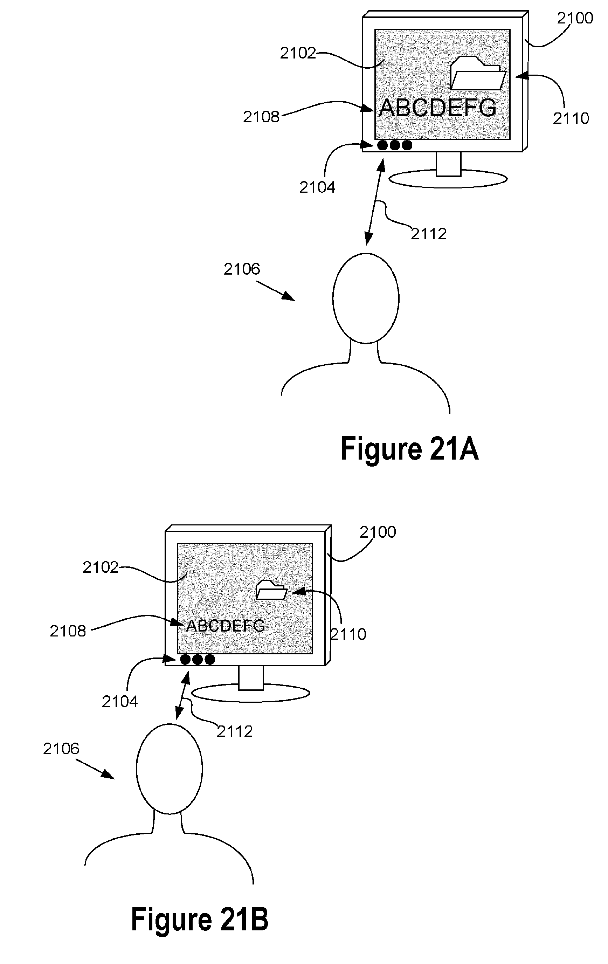

In addition to changing the size of fonts or icons based on a detected age of the user, the display can also automatically change the font and/or icon sizes based on a detected distance between the user and the display. Referring now to Figures 21A-21B, in Figure 21A, as a distance 2112 between the user 2106 and the display 2100 increases, the size of font 2108 and/or icons 2110 can increase on the display to aid in visualization. Similarly, in Figure 21B, as the distance 2112 between the user 2106 and the display 2100 decreases, the size of font 2108 and/or icons 2110 can decrease on the display. In one embodiment, an optimal distance for a user to be from the display can be preprogrammed (e.g., >80 cm from a 24" screen), and the display can be configured to automatically increase or decrease the font size by a predetermined percentage for each cm or inch the user moves away or towards the display, respectively. In some embodiments, the display can consider both the age of the user and the distance of the user from the display to determine the size of the fonts and/or icons. In some embodiments, the display system can detect whether a person is having trouble viewing the display, such as by the user's detected age, his movement closer to the display, his distance from the display, detected squinting, etc. Once viewing issues are detected, the system can automatically enlarge the font and/or icon size in response.

The amount that the size of fonts and or icons is changed can be adjusted by the user or by an administrator. For example individual users may prefer larger fonts than normal when sitting at a distance, or smaller fonts when sitting close. The amount that icons change based on distance and/or age can be completely customized by the user or the administrator of the system.

The embodiments disclosed herein may be adapted for use on a television, desktop computer monitor, laptop monitor, tablet device, other mobile devices such as smart phones, and other electronic devices with displays.

ERGONOMIC FEEDBACK USING IMAGE ANALYSIS MODULE

Example implementations will now be described more fully hereinafter with reference to the accompanying drawings; however, they may be embodied in different forms and the present subject matter should not be construed as limited to the examples set forth herein. Rather, these examples are provided so that this disclosure will be thorough and complete, and will fully convey the present subject matter to those skilled in the art.

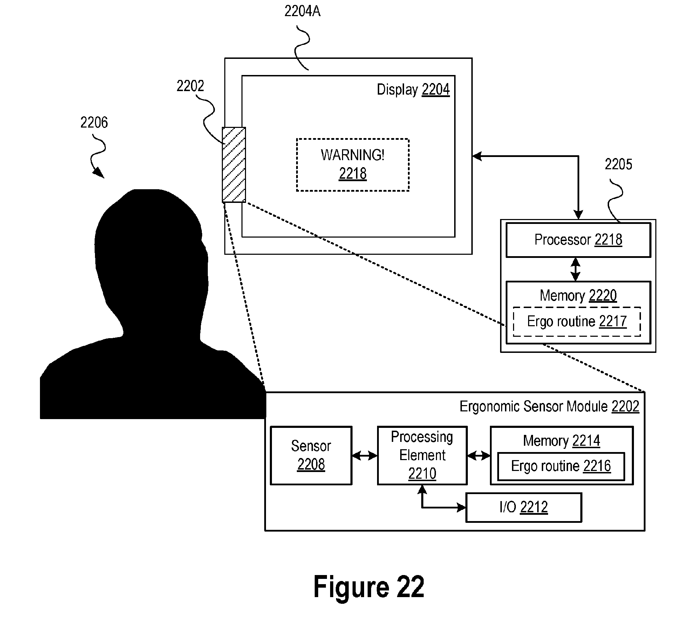

Figure 22 is a block diagram showing an illustrative ergonomic sensor module 2202 in use with a display 2204 used with a computer system 2205. The computer system may comprise a desktop, laptop, server, game system, mobile device, or other computing device driving display 2204. Display 2204 can, of course, comprise any suitable display type including, but not limited to, an LCD, plasma, CRT, or other display or even a television. Sensor module 2202 is positioned so it can produce image data of a user 2206 of display device 2204. In this example, sensor module 2202 is positioned on or in a structural element 2204A of display 2204, such as the display bezel or housing. Sensor module 2202 can be positioned at any suitable location relative to display 2204 and could even be positioned separate from the display. User 2206 may be sitting, standing, or otherwise in proximity to display 2204.

As shown in the inset, sensor module 2202 includes one or more image sensing devices (sensor 2208), a processing element 2210, and an input/output interface 2212. For example, sensor 2208 may comprise a CMOS or other image sensing technology usable to provide still and/or video image data. Processing element 2210 can comprise a microprocessor, digital signal processor (DSP), application-specific integrated circuit (ASIC), or other hardware logic configurable to sample data from sensor 2208 and provide output via I/O interface 2212.

Processing element 2210 is configured to obtain image data from the image sensing device and, in this example, analyze the image data to determine, based on accessing predefined data defining an ergonomic use range of the display device, whether the image data indicates that a user of the display is using the display within the ergonomic use range. In this example, processing element 2210 is further interfaced to memory 2214, which represents any suitable non-transitory computer-readable medium and includes program code of an ergonomic analysis routine 2216 that configures processing element 2210 to obtain and analyze the data. For instance, memory 2214 may comprise RAM, ROM, cache, or other memory or a storage device (e.g., magnetic disk, optical disk, flash memory, etc.). However, as noted above, implementations can use a hardware-based approach (e.g., an ASIC, programmable logic array, or other hardware logic that causes processing element 2210 to perform the analysis and generate output).

In some implementations, I/O interface 2212 is connected to the display device 2204 and processing element 2210 is further configured to output a feedback message 2218 using the display device in response to determining that the image data indicates that a user of the display is not using the display within the ergonomic use range. For example, ergonomic analysis routine 2216 can direct processing element 2210 to use I/O interface to display warning message 2218 without intervention or processing by computer 2205.

Computer 2205 comprises processor 2218, memory 2220, and other conventional computer components (e.g., busses, network interface, display interface, storage media, etc.). In some implementations, ergonomic analysis routine 2217 is carried out by computer 2205 in addition to or instead of ergonomic analysis routine 2216. For example, an ergonomic sensor module comprising sensor 2208, processing element 2210, and I/O interface 2212 may simply provide the image data to ergonomic analysis routine 2217. In some implementations, a webcam or other imaging device serves as ergonomic sensor module 2202.

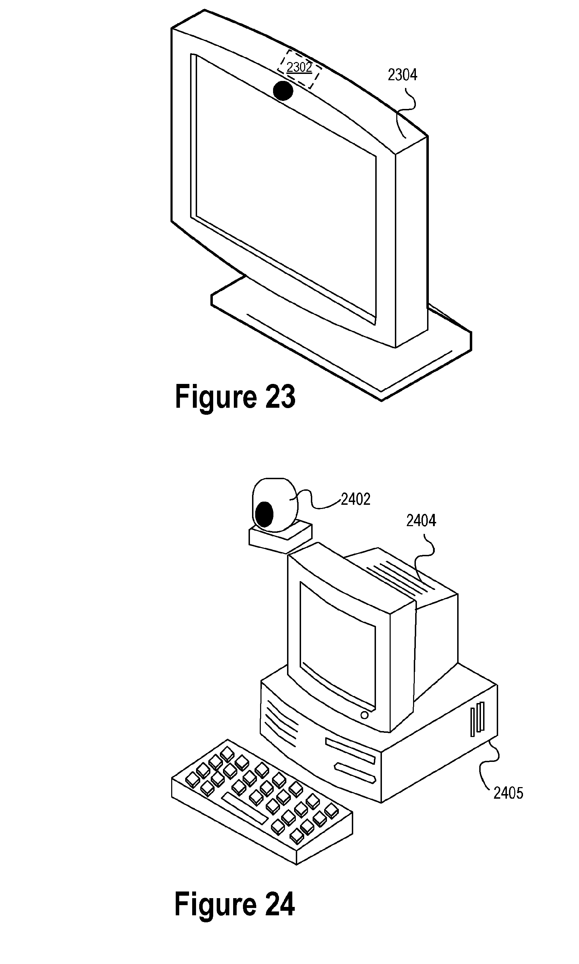

Figure 23 is a diagram showing an example of an ergonomic sensor module 2302 integrated into a structural element of a display. In this example, the components of sensor module 2302 are housed within a bezel of display 2304 with an aperture on the front face of the display to image a user. For example, ergonomic sensor module 2302 may be configured as a built-in webcam that provides image data to ergonomic analysis routine 2317 hosted at computer 2305 (not shown) interfaced to display 2304. However, sensor module 2302 may include sufficient processing capability to host ergonomic analysis routine 2316 and provide output directly using display 2304. Although module 2302 is integrated into the display bezel, a module 2302 could be integrated into other structural elements (e.g., the display base, in the screen itself, etc.).

Figure 24 is a diagram showing an example of an ergonomic sensor module 2402 used externally to a display 2404 interfaced to a computer 2405. In this example, ergonomic sensor module 2402 comprises a webcam. For instance, the web cam can provide image data over a USB or other interface for use by a processor of computer 2405 to analyze and determine appropriate feedback. The webcam can be attached to or positioned on display device 2404, such as on top of the display device, on a front face of the display device, etc. Of course, the web cam could be positioned beside the display device or elsewhere as well. Computer 2405 can be provided with software or firmware (embodied in a non-transitory computer readable medium) so that computer 2405 carries out some or all of the ergonomic analysis based on image data from the webcam.

The webcam and integrated form factors and positions shown above are for purposes of example only. The imaging device can be positioned at any suitable point to provide an image of the user of display 2404. In some implementations, the imaging device is positioned to capture light representing an image of the user as seen from display 2404 (e.g., using a sensor or optics that capture light heading toward a front face of the display).

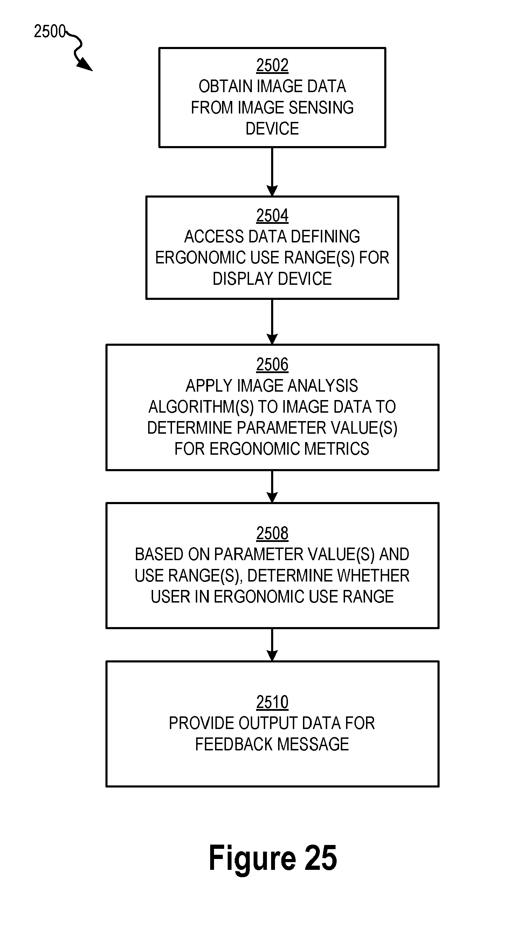

Figure 25 is a flowchart showing steps of an illustrative method 2500 carried out when using an ergonomic sensor module. For example, method 2500 may be carried out by ergonomic analysis routine 2516 implemented by module 2502 and/or may be carried out by ergonomic analysis routine 2517 implemented by computer 2505 based on image data. The sensor module may carry out method 2500 in the course of executing software or firmware. However, method 2500 may be carried out in hardware-based implementations as well, such as by hardware logic such as an application-specific integrated circuit (ASIC), programmable logic array (PLA), arrangement of logic gates, or other hardware that can obtain input values (e.g., pixel values) and process the input values to determine an output (e.g., whether the pixel values indicate an ergonomic use). In practice, method 2500 or another image analysis method can be carried out on a periodic or continuous basis to provide real-time feedback to one or more users.

Block 2502 represents obtaining image data from the image sensing device (e.g., the image sensor(s)). For example, this block can comprise accessing image data from the image sensing device, and determining that the image data depicts a user of a display device. If the user is not present, the remainder of the routine need not be carried out. Presence of the user can be determined by analyzing the field of view, such as using motion detection algorithm, comparison of a background image to the image data, face detection, or in some other way. In some implementations, multiple users can be recognized, for example by using face detection.

Generally speaking, blocks 2504-2508 represent analyzing the image data to determine, based on predefined data defining an ergonomic use range of the display device, whether the image data indicates that the user of the display is using the display within the ergonomic use range. If multiple users are recognized, the routine may determine whether each user is making ergonomic use of the display. In some embodiments, however, analyzing the image includes selecting one of the users (e.g., the primary user) to determine if that user is making ergonomic use. For example, a user can be selected by determining the largest face size seen by the imaging system at a given instant.

Block 2504 represents accessing data defining one or more ergonomic use ranges for the display device. The ergonomic use range(s) can be defined as ranges of various parameters of ergonomic metrics, the ergonomic metrics used to characterize the pose of the user and the ambient use conditions. At block 2506, one or more image analysis algorithms are applied to the image data to determine parameter values for corresponding ergonomic metrics, and at block 2508 the parameter values are compared to the ergonomic use ranges to determine whether the user is in an ergonomic use range for one or more of the ergonomic metrics.

In some implementations, the data is analyzed to determine a parameter value for one or more of the following ergonomic metrics, with the parameter value compared to the ergonomic use range listed below. However, these metrics and ranges are provided for purposes of example only. Embodiments can use additional ergonomic metrics and/or ergonomic use ranges to suit particular needs.

| Ergonomic Metric | Ergonomic Use Range |
|---|---|
| Distance from monitor (ISO 9241-5) | Ergonomic use is distance of 45cm to 75cm |
| Viewing angle for line of sight and angle of view (ISO 9241-5) | Ergonomic use is a viewing angle not greater than 40 degrees |
| Time user has been staring at the monitor | Ergonomic use is staring for less than 10s |
| Glare conditions from or toward monitor (ISO 8995-1) | Ergonomic use is no glare behind or near the user or on the screen |
| Ambient light conditions (8995-1, OSHO 1926.56(a) | Ergonomic use is between 100 and 900 lux |
| Face roll angle relative to display | Ergonomic use is within +/-30 degrees |
| Face yaw angle relative to display | Ergonomic use is within +/-15 degrees |
| Face pitch angle relative to display | Ergonomic use is within +/-20 degrees |
| Time proximate to display without break | Ergonomic use is any time interval less than the threshold period of time for taking a break |

The image data can be analyzed in any suitable way to yield parameter values for the ergonomic metrics. For example, in some implementations the analysis includes using a face recognition algorithm to determine where the user's face lies in the image. Use of facial recognition algorithms can allow the sensor module to analyze the use of the display independently of a shape of the user's face (e.g., without regard to whether the user's face is elliptical, square, or some other shape) The algorithm looks for skin tones and detection of face features such as eye, lips/mouth positions to determine the presence of a person and hence is independent of the actual shape of the face itself. Based on the location of the user's face, the facial portion of the image can be subjected to additional analysis algorithms to determine parameter values for various ergonomic metrics.

Additionally, by using image analysis, the question of ergonomic use can be resolved independently of precaptured posture data for the user or requiring the user to match some predefined posture or position. Instead, the image data itself is used to determine whether features of the user detectable in the image and/or ambient conditions detectable in the image are consistent (or inconsistent) with ergonomic use, without the need for complex modeling of the user. The algorithm uses a measure of inter-pupillary distance (distance between the centers of both eyes) to detect the distance of a face from the display and uses the same metric to determine if the face has a yaw/tilt/roll angles.

For example, distance from the monitor can be determined by identifying a feature (e.g., the user's eyes) in the image. Based on data indicating the sensor module's position, the distance and angle of the user can be estimated using parallax or triangulation from the user's eyes or even from the user's entire face.

In one implementation, a feature recognition algorithm locates a user's eyes based on analyzing the image to identify shadows below the user's eyes. In particular, the pixel intensity values for the image can be evaluated to identify darker regions that may correspond to shadows; if the darker regions are similarly-shaped and an acceptable distance apart, then the feature recognition algorithm may conclude that the user's eyes are above the shadows.

Image analysis that recognizes a user's eyes can be used to determine whether the user has stared for too long without blinking. For instance, a blink recognition algorithm may analyze a series of images to determine how long the user's eyes have remained open (i.e., present in the series of images). If the user's eyes have not blinked after a threshold period of time has elapsed, a warning or other feedback can be provided.

In some implementations, the user's eyes, face, and/or other distinguishing feature(s) can be used to determine whether the same user has remained proximate (e.g., in front of) the display without a break. For example, a threshold period of time may be defined for ergonomic use of the display. By analyzing the length of time the user is continuously present, the sensor module can determine if the user has exceeded the threshold and should take a break. The algorithm can also look for a minimum break duration to ensure that the user stays away from the display for a minimum period of time.

In some implementations, the image data is analyzed to determine information about the spatial position of the user's face relative to the display (e.g., relative to a plane of the display). For example, one or more of the user's face roll angle, yaw angle, or pitch angle relative to the display to determine if the user's face is within an ergonomic use range based on the determined angle or angles. The roll, pitch, and yaw angles may be defined as indicating angles of rotation of the plane of the user's face relative to the plane of the display.

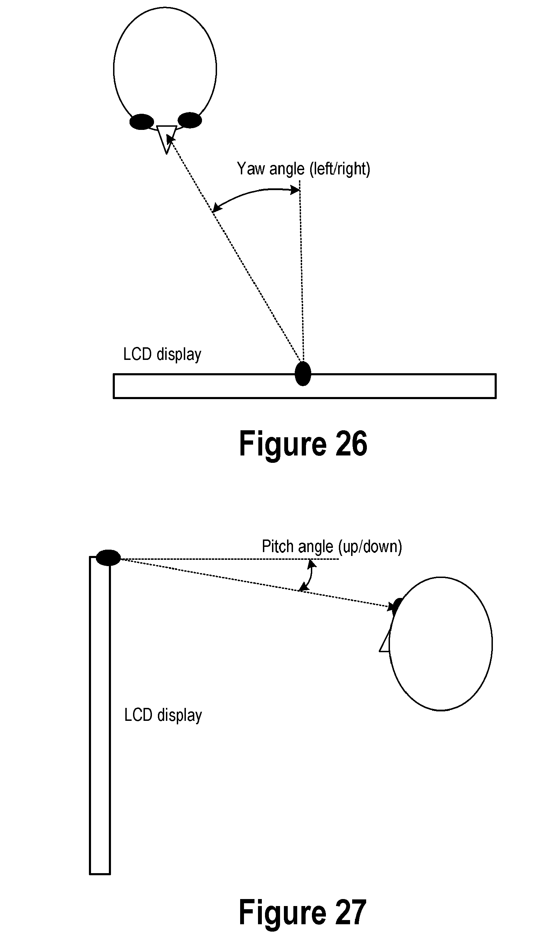

Figure 26 illustrates the user's yaw angle relative to the display. The yaw angle measures how far to the right or the left the user is offset from a point on the display. As shown in Figure 26 the yaw angle is the angle between a line extending from the user to a point on the display and a perpendicular line extending from the point on the display when viewed from the top or bottom of the display. For example, the line between the user and the display may include a point on the user that approximates a point between the user's eyes the midpoint of the display.

Figure 27 illustrates the user's pitch angle relative to the display. The pitch angle measures how far above or below the user is offset from a point on the display. As shown in Figure 27 the pitch angle is the angle between a line extending from the user to a point on the display and a perpendicular line extending from the point on the display when viewed from the side of the display. For example, the line between the user and the display may include a point on the user that approximates a point near the user's eye and a point at the top of the display.

Glare and ambient light can be recognized using an algorithm that searches the image for patterns of intensity that correspond to glare and/or ambient light that is too bright or too dim. For example, the average intensity of the image can be found and scaled to determine a parameter value for ambient light conditions. Glare from the monitor can be identified by searching for areas of the image where intensity spikes-for example, areas of the user's face such as the user's cheeks/forehead can be analyzed to determine if the user's face is reflecting a large amount of light. By analyzing intensity values across the entire image an ongoing basis, a processing element that carries out the ergonomic analysis routine can determine ergonomic use independently of changes in ambient lighting conditions. The measured intensity across the image is thresholded to determine low light conditions. The algorithm picks the area of the image proximate to the user's face and above to remove effects of the user's dark clothing lowering the average intensity value.

Glare toward the monitor can be identified by analyzing the image for high backlighting-assuming the image sensor is facing the user, if the user is backlit (i.e., the facial area has lower pixel intensities than areas surrounding the user's face), glare toward the monitor may be present. The intensity difference can be used to determine a parameter value to compare to the ergonomic use range for glare.

As noted above, at block 2708 the ergonomic analysis routine determines whether the user is in one or more ergonomic use ranges, such as by comparing the parameter values calculated from the image to the accessed data defining use ranges, the ergonomic analysis routine can determine whether a user is within, outside, or near a limit for ergonomic use of the display.

The ergonomic analysis routine operates with displays that have multiple orientations. For example, some displays allow a user to rotate a display by approximately 90 degrees so that in one orientation the display is wider than it is tall, commonly referred to as landscape orientation, and in a second orientation the display is taller than it is wide, commonly referred to as portrait orientation. The ergonomic analysis routine determines the orientation of the display and if necessary, makes adjustments based on the orientation. In one implementation, the ergonomic analysis routine monitors a control signal and determines the orientation of the display from the state or level of the control signal.

Block 2710 represents providing output data for a feedback message. The format, content, and triggering criteria for a feedback message can vary, and in some implementations the message is provided in real-time with the image analysis. As one example, a feedback message can be provided if the analysis shows that the user is outside an ergonomic use range, with the message indicating which metric (e.g., distance, angle, lack of blinking, ambient light, etc.) or metrics have been "violated." This can allow the user to take corrective action.

Feedback can also be provided to indicate when a user is near an edge of the ergonomic use range. For instance, if the user is nearly too close or far from the display (e.g., 3-4 cm from the limit), a warning may be provided to allow for corrective action. Still further, feedback can also be provided when the user is inside an ergonomic use range, for example to reinforce good use.

The format of the feedback message can vary as noted above. In one implementation, a visual message is provided by sending data to display 2704. For instance, a popup window or overlay can be generated with text or graphics. Other examples include sound or other feedback.

The data for the feedback message can be provided by sensor module 2702 itself or by computer 2705, depending upon the particular implementation. For example, in one implementation module 2702 is integrated into the display and can provide the message directly to the display while partially or completely obscuring other data provided by computer 2705 (e.g., the message can be provided in an overlay rendered on top of displayed data (if any) from computer 2705). However, in some implementations, ergonomic analysis routine 2716 executed by module 2702 provides data indicating an output message to generate and computer 2705 utilizes a counterpart ergonomic analysis routine 2717 hosted by computer 2705 to render a window or otherwise provide the message. Still further, module 2702 may simply provide image data, with the image data analyzed by an analysis routine 2717 hosted by computer 2705, which also renders the window or otherwise provides the message.

Several examples of using an ergonomic sensor module 2702 above utilize one sensor. It will be understood that multiple sensors can be used within one module 2702, and that multiple modules 2702 could be used, either for a single display or for multiple displays concurrently.

Any suitable non-transitory computer-readable medium or media may be used to implement or practice the presently-disclosed subject matter, including, but not limited to, diskettes, drives, magnetic-based storage media, optical storage media (e.g., CD-ROMS, DVD-ROMS, and variants thereof), flash, RAM, ROM, register storage, cache memory, and other memory devices. For example, implementations include (but are not limited to) non-transitory computer-readable media embodying instructions that cause a processor to carry out methods as set forth herein, and/or operations carried out during the operation of implementations including (but not limited to) the examples discussed herein.

The present subject matter can be implemented by any computing device that carries out a series of operations based on commands. Such hardware circuitry or elements include general-purpose and special-purpose processors that access instructions stored in a computer readable medium that cause the processor to carry out operations as discussed herein as well as hardware logic (e.g., field-programmable gate arrays (FPGAs), programmable logic arrays (PLAs), application-specific integrated circuits (ASICs)) configured to carry out operations as discussed herein.

While an exemplary drawings and specific embodiments of the present invention have been described and illustrated, it is to be understood that that the scope of the present invention is not to be limited to the particular embodiments discussed. Thus, the embodiments shall be regarded as illustrative rather than restrictive, and it should be understood that variations may be made in those embodiments by workers skilled in the arts without departing from the scope of the present invention as set forth in the claims that follow and their structural and functional equivalents.

In addition, in methods that may be performed according to preferred and alternative embodiments and claims herein, the operations have been described in selected typographical sequences. However, the sequences have been selected and so ordered for typographical convenience and are not intended to imply any particular order for performing the operations, unless a particular ordering is expressly indicated as being required or is understood by those skilled in the art as being necessary.

THE DISCLOSURE OF THIS APPLICATION ALSO INCLUDES THE FOLLOWING NUMBERED CLAUSES:

1. A hand-held camera-enabled video-conferencing device, comprising:

a housing configured to be held in a user's hand;
a processor within the housing;
a memory within the housing having code embedded therein for programming the processor, including video-conferencing, face detection, face recognition and associated image processing components, and wherein the memory further contains face data associated with one or more specific user identities;
a display built into the housing and configured to be viewable by a user during a video conference; and
a camera built into the housing and configured to capture images of the user while viewing the display, including an infrared (IR) light source and IR sensitive image sensor for capturing images of the user under low-light or uneven light conditions, or both, to permit the face detection component to detect the user's face; and
wherein the face recognition component is configured to associate a specific identity of a user to a detected face; and
wherein the image processing component replaces face data of the detected face with face data stored in the memory in accordance with the specific identity of the user to enhance and transmit to a remote video conference participant an image of the detected face captured under low light or uneven light conditions, or both.

2. The device of clause 1, wherein the face data comprises chrominance data. 3. The device of clause 1 or 2, wherein the face data comprises luminance data. 4. The device of clause 1, 2 or 3, wherein the face detection or face recognition components, or both, comprises classifiers trained to detect faces or to recognize faces, or both, under low-light or uneven light conditions, or both. 5. The device of any preceding clause, wherein the IR light source comprises one or more IR LEDs coupled to the housing and disposed to illuminate the user's face during a video conference. 6. The device of any preceding clause, wherein the memory further contains a face tracking component to track the detected face to permit the device to transmit approximately continuous video images of the user's face during the video conference.

7. The device of any preceding clause, wherein the memory further comprises a component to estimate a distance to the user's face and control an output power of the IR light source based on the estimated distance. 8. The device of clause 7, wherein the estimate of the distance is determined using auto-focus data. 9. The device of clause 7 or 8, wherein the estimate of the distance is determined based on a detected size of the user's face. 10. The device of any of clauses 7 to 9, wherein the memory further comprises a component to determine a location of a user's face relative to the device and to control a direction of the IR light source illuminate the user's face.

11. A hand-held camera-enabled video-conferencing device, comprising:

a housing configured to be held in a user's hand;

a processor within the housing;

a memory within the housing having code embedded therein for programming the processor, including video-conferencing, and foreground/background segmentation components, or combinations thereof,

a display built into the housing and configured to be viewable by a user during a video conference;

a camera built into the housing and configured to capture images of the user while viewing the display; and

a communications interface to transmit audio/visual data to a remote video conference participant; and

wherein the foreground/background segmentation component is configured to extract user identity data without background data by discerning different motion vectors for foreground versus background data.

12. The device of clause 11, wherein the user identity data comprises face data. 13. The device of clause 11 or 12, wherein the foreground/background segmentation component is calibrated to match specific user identity data as foreground data.

14. A hand-held camera-enabled video-conferencing device, comprising:

a housing configured to be held in a user's hand;

a processor within the housing;

a memory within the housing having code embedded therein for programming the processor, including video-conferencing, and foreground/background segmentation components, or combinations thereof,

a display built into the housing and configured to be viewable by a user during a video conference;

a camera built into the housing and configured to capture images of the user while viewing the display; and

a communications interface to transmit audio/visual data to a remote video conference participant; and

wherein the foreground/background segmentation component is configured to extract user identity data without background data by matching detected face data as foreground data

15. The device of clause 14, wherein the camera includes an infrared (IR) light source and IR sensitive image sensor for capturing images of the user under low-light or uneven light conditions, or both, to permit a face detection component to detect a user's face.

16. The device of clause 15, wherein the image processing component replaces face data of the detected face with face data stored in the memory in accordance with the specific identity of the user to enhance and transmit to a remote video conference participant an image of the detected face captured under low light or uneven light conditions, or both.

17. The device of clause 14, 15 or 16, wherein the memory further contains a face tracking component to track the detected face to permit the device to transmit approximately continuous video images of the user's face during the video conference.

18. The device of any of clauses 14 to 17, wherein the specific user identity data comprises an image of a detected face. 19. The device of clause 18, wherein the specific user identity data further comprises neck, partial torso or shirt, or one or both arms, or combinations thereof.

20. The device of any of clauses 14 to 18, wherein the memory further contains face data associated with one or more specific user identities, and the device is configured to extract the specific user identity data based on matching the face data in the memory.

21. A method of dynamically changing a display parameter, comprising:

detecting a user parameter of a user positioned before an electronic display; and

automatically adjusting a user preference on the display or displaying an indicator, or both, based on the detected user parameter.

22. The method of clause 21 wherein the user parameter comprises an age of the user. 23. The method of clause 22 comprising determining that the user includes an elderly person and increasing an amount of displayable content accordingly. 24. The method of clause 22 comprising determining that a user includes a child or young adult and decreasing an amount of displayable content accordingly. 25. The method of clause 22 or 24 comprising determining that a user includes a child or young adult and increasing privacy settings accordingly. 26. The method of clause 22 or 23 comprising determining that a user includes an adult or an elderly person, and decreasing one or more privacy settings accordingly.

27. The method of clause 21 wherein the user parameter comprises a distance from the user to the electronic display. 28. The method of clause 27 comprising determining that a distance is less than a predetermined distance and displaying a distance indicator accordingly.

29. The method of clause 21 wherein the user parameter comprises a time the user has been positioned before the display. 30. The method of clause 29 comprising determining that the time is greater than a predetermined time limit and displaying a time indicator accordingly.

31. The method of clause 21 wherein the user parameter comprises a head angle. 32. The method of clause 31 comprising determining that a head angle is improper and displaying an ergonomic indicator accordingly.

33. The method of clause 21 wherein the user parameter comprises an ambient light level. 34. The method of clause 21 wherein the user parameter comprises an ambient light level and a pupil closure percentage. 35. The method of clause 33 or 34, comprising determining that the ambient light level is high, and automatically brightening the display accordingly. 36. The method of clause 34, comprising determining that the pupil closure percentage is low and automatically dimming the display accordingly. 35. The method of clause 34, comprising the pupil closure percentage is high, and automatically brightening the display accordingly. 36. The method of clause 34, comprising determining that the ambient light level is low, and automatically dimming the display accordingly. 39. The method of clause 33 comprising automatically dimming or brightening the display based on the detected ambient light level.

40. The method of clause 21 wherein the user parameter comprises an unknown user. 41. The method of clause 40 comprising dimming or turning off the display when the unknown user is detected. 42. The method of clause 40 or 41 comprising locking the display and showing a security indicator on the display when the unknown user is detected. 43. The method of clause 42 comprising notifying the unknown user with the security indicator that access to the display is denied.

44. The method of any of clauses 21 to 40 wherein the detecting comprises detecting the user parameter with a sensor disposed on or near the electronic display. 45. The method of clause 44 wherein the sensor comprises a camera.

46. The method of any of clauses 21 to 45 wherein the electronic display comprises a computer monitor.

47. The method of any of clauses 21 to 46 wherein the electronic display comprises a cellular telephone.

48. The method of any of clauses 21 to 47 wherein the automatically adjusting comprises processing the user parameter with a controller and automatically adjusting the user preference on the display or displaying the indicator or both based on the detected user parameter.

49. An electronic display, comprising:

sensors configured to detect a user parameter of a user positioned before the display;
a screen configured to display text or images or both to the user; and
a processor configured to adjust a user preference or display an indicator or both based on the detected user parameter.

50. The electronic display of clause 49 wherein the user parameter comprises age.

51. The electronic display of clause 49 wherein the user parameter comprises a distance from the user to the electronic display. 52. The electronic display of clause 49 wherein the user parameter comprises a head angle of the user. 53. The electronic display of clause 49 wherein the user parameter comprises an unknown user. 54. The electronic display of clause 49 wherein the user parameter comprises an ambient light level. 55. The electronic display of any of clauses 49 to 54 wherein the sensor comprises a camera. 56. The electronic display of any of clauses 49 to 55 wherein the electronic display comprises a computer monitor. 57. The electronic display of any of clauses 49 to 55 wherein the electronic display comprises a cellular telephone. 58. The electronic display of any of clauses 49 to 55 wherein the electronic display comprises a tablet computer.

59. A method of dynamically adjusting a display parameter, comprising:

determining with a sensor whether a user's face is positioned before an electronic display;
when the user's face is determined to not be positioned before the electronic display, monitoring for the user's face with the sensor for a predetermined period of time; and
initiating a power savings routine on the electronic display when the user's face is not positioned before the electronic display during the predetermined period of time.

60. The method of clause 59, wherein the power savings routine comprises a routine for dimming the display. 61. The method of clause 59, wherein the power savings routine comprises a routine for powering off the display. 62. The method of clause 61 further comprising, after powering off the display, occasionally powering on the sensor of the electronic display to monitor for the user's anatomy.

63. The method of any of clauses 59 to 62, further comprising:

determining with the sensor if the user's eyes are gazing towards the electronic display;
when the user's eyes are determined to not be gazing towards the electronic display, monitoring with the sensor for the user's eyes to gaze towards the display during the predetermined period of time; and
initiating the power savings routine on the electronic display when the user's eyes do not gaze towards the electronic display during the predetermined period of time.

64. The method of any of clauses 59 to 63 wherein the predetermined period of time comprises a user adjustable component.

65. The method of clause 60 or any of clauses 61 to 64 when dependent on clause 60 wherein the routine for dimming the display utilizes a user adjustable dimming percentage.

66. An electronic display, comprising:

a sensor configured to detect a user's face positioned before the display; and
a processor configured to implement a power savings routine when the user's face is determined to not be positioned before the display during a predetermined period of time.

67. The electronic display of clause 66 wherein the sensor comprises a camera. 68. The electronic display of clause 66 or 67 wherein the electronic display comprises a computer monitor. 69. The electronic display of clause 66 or 67 wherein the electronic display comprises a cellular telephone.

70. A method of dynamically changing a display parameter, comprising:

detecting a user parameter of a user positioned before an electronic display; and
automatically adjusting a font size of text on the display based on the detected user parameter.

71. The method of clause 70 wherein the user parameter is an approximate age of the user. 72. The method of clause 71 comprising increasing the font size when the user includes an elderly person. 73. The method of clause 71 comprising decreasing the font size when the user includes a child or young adult.

74. The method of clause 70 wherein the user parameter comprises a distance from the user to the electronic display. 75. The method of clause 74 comprising increasing the font size when the distance is detected to be greater than a predetermined distance. 76. The method of clause 74 comprising decreasing the font size when the distance is detected to be less than a predetermined distance. 77. The method of clause 74 comprising changing the font size dynamically in real time as the distance from the user to the electronic display changes. 78. The method of clause 77 comprising decreasing the font size is decreased in real time as the distance from the user to the electronic display becomes smaller, or increasing the font size in real time as the distance from the user to the electronic display becomes larger, or both.

79. The method of any of clauses 70 to 78 wherein the detecting comprises detecting the user parameter with a sensor disposed on or near the electronic display.

80. The method of clause 79 wherein the sensor comprises a camera.

81. The method of any of clauses 70 to 80 wherein the electronic display comprises a computer monitor. 82. The method of any of clauses 70 to 80 wherein the electronic display comprises a cellular telephone.

83. The method of any of clauses 70 to 82 wherein the automatically adjusting step comprises processing the user parameter with a controller and automatically adjusting the font size of text on the display with the controller based on the detected user parameter.

84. A method of dynamically changing a display parameter, comprising:

detecting a user parameter of a user positioned before an electronic display; and
automatically adjusting an icon size on the display based on the detected user parameter.

85. The method of clause 84 wherein the user parameter comprises an age of the user. 86. The method of clause 85 comprising increasing the icon size when the user is elderly. 87. The method of clause 85 comprising decreasing the icon size when the user is detected to include a child or young adult. 88. The method of clause 84 wherein the user parameter comprises a distance from the user to the electronic display. 89. The method of clause 88 comprising increasing the icon size when the distance is greater than a predetermined distance. 90. The method of clause 88 comprising decreasing the icon size when the distance is less than a predetermined distance. 91. The method of any of clauses 70 to 90 wherein the detecting comprises detecting the user parameter with a sensor disposed on or near the electronic display. 92. The method of clause 91 wherein the sensor comprises a camera.

93. The method of any of clauses 84 to 92 wherein the electronic display comprises a computer monitor. 94. The method of any of clauses 84 to 92 wherein the electronic display comprises a cellular telephone.

95. The method of any of clauses 84 to 93 wherein the automatically adjusting comprises processing the user parameter with a controller and automatically adjusting the font size of text on the display with the controller based on the detected user parameter.

96. The method of clause 88 or any of claims 89 to 95 when dependent on claim 88 comprising changing the icon size dynamically in real time as the distance from the user to the electronic display changes.

97. The method of clause 88 or any of claims 89 to 95 when dependent on claim 88 comprising decreasing the icon size in real time as the distance from the user to the electronic display becomes smaller, or increasing the icon size in real time as the distance from the user to the electronic display becomes larger, or both.

98. An electronic display, comprising:

a sensor configured to determine a user parameter of a user positioned before the display;
a screen configured to display text or images or both to the user; and
a processor configured to adjust a size of the text or images or both based on the determined user parameter.

99. The electronic display of clause 98 wherein the user parameter comprises age. 100. The electronic display of clause 98 wherein the user parameter comprises a distance from the user to the electronic display. 101. The electronic display of clause 98, 99 or 100 wherein the sensor comprises a camera. 102. The electronic display of clause 98, 99, 100 or 101 wherein the electronic display comprises a computer monitor. 103. The electronic display of clause 98, 99, 100 or 101 wherein the electronic display comprises a cellular telephone. 104. The electronic display of any of clauses 98 to 101 wherein the electronic display comprises a tablet computer.

A method or device according comprising any combination of the features of any of the preceding clauses.
A method or device providing any combination of user parameter recited in any of the preceding clauses.
An embodiment of the present invention provides an electronic display which includes an image capture and analysis feature. The display may be configured to detect a user parameter of a user positioned before the display. The device can analyze the image and dynamically adjust fonts and/or user preference settings, and/or provide ergonomic analysis. A mobile video-conferencing device includes a camera built into the device housing and configured to capture, detect and recognize images of a user who is viewing the display. An infrared (IR) light source and IR sensitive image sensor may be used to capture images of the user under low-light, no light or uneven light conditions to enhance and transmit to a remote video conference participant an image of the user's face.

**Claims**

1. A hand-held camera-enabled video-conferencing device, comprising:

   a housing configured to be held in a user's hand;
   a processor within the housing;
   one or more memories within the housing having code embedded therein for programming the processor to perform video-conferencing;
   a display built into the housing and configured to be viewable by a user during a video conference;
   a camera built into the housing and configured to capture images of the user while viewing the display; and
   a communications interface to transmit audio/visual data to a remote video conference participant; and
   a foreground/background segmentation component that is configured to extract user identity data without background data by discerning different motion vectors for foreground versus background data.

2. The device of claim 1, wherein the foreground/background segmentation component is calibrated to match a specific user identity data as foreground data.

3. The device of any of the above claims, wherein the user identity data comprises face data.

4. The device of claim 3, wherein the face data comprises chrominance data.

5. The device of any of the above claims, wherein the foreground/background segmentation component is configured to extract user identity data without background data by matching detected face data as foreground data.

6. The device of any of the above claims, wherein the one or more memories further have code embedded therein for programming the processor in accordance with a face detection component, and wherein the one or more memories contain face data associated with one or more specific user identities, and wherein the camera includes an infrared, IR, light source and IR sensitive image sensor for capturing images of the user under low-light or uneven light conditions, or both, to permit the face detection component to detect the user's face.

7. The device of claim 6, wherein said face detection component comprises one or more cascades of classifiers trained specifically to detect faces under low-light or uneven light conditions, or both.

8. The device of claim 6 or 7, wherein the memory further has code embedded therein for programming the processor to perform face recognition by associating a specific identify of a user to a detected face, and to replace face data of the detected face with face data stored in the one or more memories in accordance with the specific identity of the user to enhance and transmit to a remote video conference participant an image of the detected face captured under low light or uneven light conditions, or both.

9. The device of claim 8, wherein said face recognition comprises applying classifiers trained to recognize faces under low-light or uneven light conditions, or both.

10. The device of any of claims 6 to 9, wherein the IR light source comprises one or more IR LEDs coupled to the housing and disposed to illuminate the user's face during a video conference.

11. The device of any of claims 3 to 10, wherein the one or more memories further contain a face tracking component to track the user's face to permit the device to transmit approximately continuous video images of the user's face during the video conference.

12. The device of any of the above claims, wherein the memory further comprises a component to estimate a distance to the user's face and control an output power of the IR light source based on the estimated distance.

13. The device of claim 12, wherein the estimate of the distance is determined using auto-focus data.

14. The device of claim 12 or 13, wherein the estimate of the distance is determined based on a detected size of the user's face.

15. The device of any of claims 12 to 14, wherein the memory further comprises a component to determine a location of a user's face relative to the device and to control a direction of the IR light source to illuminate the user's face.

Figure 1

Figure 2

Figure 3

Figure 4

Figure 5

Figure 6

Figure 7A

Figure 7B

Figure 8A

Figure 8B

900

902

904

906

# Figure 9

1000

1002

Child
Settings
Enabled

1008

1004

1006

# Figure 10

1100

1102

User 1
Settings
Enabled

1108

1104

1106

## Figure 11A

1100

1102

User 2
Settings
Enabled

1108

1104

## Figure 11B

1200

1202

1210

1204

1206

**Figure 12**

1300

1302

1312

1304

1306

**Figure 13**

**Figure 14**

User Not
Recognized

**Figure 15**

Figure 16

Sitting too close

Figure 17

Figure 18

Figure 19A

Figure 19B

**Figure 20A**

**Figure 20B**

**Figure 21A**

**Figure 21B**

2204A

2202

2206

Display 2204

WARNING!
2218

2205

Processor 2218

Memory 2220

Ergo routine 2217

Ergonomic Sensor Module 2202

Sensor
2208

Processing
Element
2210

Memory 2214

Ergo routine 2216

I/O 2212

# Figure 22

**Figure 23**

**Figure 24**

2500

```
┌─────────────────────────┐
│          2502           │
│    OBTAIN IMAGE DATA    │
│   FROM IMAGE SENSING    │
│         DEVICE          │
└─────────────────────────┘
            │
            ▼
┌─────────────────────────┐
│          2504           │
│    ACCESS DATA DEFINING │
│ ERGONOMIC USE RANGE(S) FOR│
│      DISPLAY DEVICE     │
└─────────────────────────┘
            │
            ▼
┌─────────────────────────┐
│          2506           │
│    APPLY IMAGE ANALYSIS │
│  ALGORITHM(S) TO IMAGE DATA TO│
│ DETERMINE PARAMETER VALUE(S)│
│    FOR ERGONOMIC METRICS│
└─────────────────────────┘
            │
            ▼
┌─────────────────────────┐
│          2508           │
│ BASED ON PARAMETER VALUE(S) AND│
│ USE RANGE(S), DETERMINE WHETHER│
│  USER IN ERGONOMIC USE RANGE│
└─────────────────────────┘
            │
            ▼
┌─────────────────────────┐
│          2510           │
│   PROVIDE OUTPUT DATA FOR│
│     FEEDBACK MESSAGE    │
└─────────────────────────┘
```

# Figure 25

Yaw angle (left/right)

LCD display

**Figure 26**

Pitch angle (up/down)

LCD display

**Figure 27**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 13220612 B
- US 13294977 B
- US 61530872 B
- US 13294964 B
- US 61530867 B
- US 13082568 B
- US 12883183 B
- US 12883191 B
- US 12883192 B
- US 20080219517 A
- US 20110102553 A
- US 7844076 B
- US 7460695 B
- US 7315631 B
- US 20080219581 A
- US 20110102638 A
- US 20090303343 A
- US 20110081052 A
- US 20070269108 A
- US 20100026831 A
- US 20090080796 A
- US 20110064329 A
- US 20110013043 A
- US 20090179998 A
- US 20100066822 A
- US 20100321537 A
- US 20110002506 A
- US 20090185753 A
- US 20100141786 A
- US 20070201726 A
- US 20110134287 A
- US 20100053368 A
- US 20100054592 A
- US 20080317378 A
- US 12959151 B
- US 20090189997 A
- US 7953287 B
- US 7469071 B
- US 7868922 B
- US 7912285 B
- US 7957597 B
- US 7796822 B
- US 7796816 B
- US 7680342 B
- US 7606417 B
- US 7692696 B
- US 7317815 B
- US 7564994 B
- US 7697778 B
- US 7773118 B
- US 20090167893 A
- US 20110050919 A
- US 20070296833 A
- US 20080309769 A
- US 20090179999 A
- US SN12941983 A
- US 20080205712 A
- US 20090003661 A
- US 13035907 B
- US 12944701 B
- US 7853043 B
- US 7844135 B
- US 7715597 B
- US 7620218 B
- US 7587068 B
- US 7565030 B
- US 7558408 B
- US 7555148 B
- US 7551755 B
- US 7460694 B
- US 7403643 B
- US 7269292 B
- US 7630006 B, DeLuca
- US 5781650 A, Lobo
- US 035907 A